(19) Europäisches Patentamt
European Patent Office
Office européen des brevets

(11) EP 3 842 397 B1

(12) EUROPEAN PATENT SPECIFICATION

(45) Date of publication and mention of the grant of the patent:
**09.10.2024 Bulletin 2024/41**

(21) Application number: **19851810.2**

(22) Date of filing: **20.08.2019**

(51) International Patent Classification (IPC):
***C03C 27/12*** (2006.01) ***B32B 17/06*** (2006.01)
***B32B 27/20*** (2006.01) ***B32B 17/10*** (2006.01)
***B32B 5/14*** (2006.01) ***B32B 7/023*** (2019.01)
***B32B 3/26*** (2006.01) ***B32B 27/18*** (2006.01)

(52) Cooperative Patent Classification (CPC):
**B32B 17/1066; B32B 3/263; B32B 5/142; B32B 5/145; B32B 7/023; B32B 17/10036; B32B 17/10293; B32B 17/10357; B32B 17/10761; B32B 17/10935; B32B 27/18;** B32B 2250/03; B32B 2250/05; B32B 2250/40; B32B 2255/06;

(Cont.)

(86) International application number:
**PCT/JP2019/032371**

(87) International publication number:
**WO 2020/040114 (27.02.2020 Gazette 2020/09)**

(54) **INTERLAYER FILM FOR LAMINATED GLASS, ROLL BODY AND METHOD OF MANUFACTURING LAMINATED GLASS SET**

ZWISCHENSCHICHTFILM FÜR VERBUNDGLAS, WALZENKÖRPER UND VERFAHREN ZUR HERSTELLUNG EINES VERBUNDGLASSATZES

FILM INTERCOUCHES POUR VERRE FEUILLETÉ, CORPS DE CYLINDRE ET PROCÉDÉ DE FABRICATION D’UN ENSEMBLE EN VERRE FEUILLETÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.08.2018 JP 2018154153**

(43) Date of publication of application:
**30.06.2021 Bulletin 2021/26**

(73) Proprietor: **SEKISUI CHEMICAL CO., LTD.**
**Osaka-shi**
**Osaka**
**530-8565 (JP)**

(72) Inventors:
- **NAKAYAMA, Kazuhiko**
**Kouka-shi, Shiga 528-8585 (JP)**
- **INUI, Hiroaki**
**Kouka-shi, Shiga 528-8585 (JP)**

(74) Representative: **Ter Meer Steinmeister & Partner Patentanwälte mbB**
**Nymphenburger Straße 4**
**80335 München (DE)**

(56) References cited:
**EP-A1- 0 464 790**
**EP-A1- 2 465 833**
**WO-A1-2016/163486**
**JP-A- 2006 001 807**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
B32B 2255/20; B32B 2255/205; B32B 2264/104;
B32B 2307/102; B32B 2307/204; B32B 2307/4026;
B32B 2307/412; B32B 2307/416; B32B 2307/418;
B32B 2307/546; B32B 2307/732

## Description

### TECHNICAL FIELD

The present invention relates to an interlayer film for laminated glass having a gradation pattern. Also, the present invention relates to a roll body prepared with the interlayer film for laminated glass. Also, the present invention relates to a method for producing a laminated glass set using the interlayer film for laminated glass.

### BACKGROUND ART

Laminated glass in which an interlayer film for laminated glass is sandwiched between a pair of glass plates is known. The laminated glass is widely used for automobiles, railway vehicles, aircraft, ships, buildings and the like. In recent years, laminated glass having privacy protectability is requested as laminated glass for buildings. In laminated glass having privacy protectability, for example, there is a region where a person or an object located behind the laminated glass is invisible although the region can transmit light.

As one example of laminated glass having privacy protectability, the following Patent Document 1 discloses a laminated glass prepared with a multilayer interlayer film having an opaque layer. In the laminated glass, privacy protectability is achieved by the opaque layer that makes a person or an object located behind the laminated glass invisible.

The laminated glass disclosed in Patent Document 1 faces the problem that the appearance designability is poor because the whole surface of the glass has the same color.

Also, use application of laminated glass has become diversified. In recent years, there has been a demand for laminated glass provided with appearance designability by a gradation pattern as well as the privacy protectability.

The following Patent Documents 2 and 3 disclose a laminated glass prepared with an interlayer film having a gradation pattern.

### Related Art Documents

### Patent Documents

Patent Document 1: WO2006/082800A1
Patent Document 2: WO2014/077328A1
Patent Document 3: WO2015/072538A1

EP 0 464 790 A1 discloses a process for the extrusion of a thermoplastic polymer sheet with a gradient colour band incorporated therein, used as interlayer for windshields which comprises: (a) providing a first extrusion mould having a manifold and a slit dye orifice; (b) providing an inner passage located in the extrusion mould manifold and having an orifice; (c) providing means for supplying a first resin to said manifold, and means for supplying a second colour resin to said inner passage; (d) spacing said inner passage a sufficient distance from said manifold slit dye orifice to permit flow of the first resin in a widthwise direction wherein said widthwise direction flow causes spreading of said coloured material as it passes between said orifice and said slit-shaped dye orifice; and (e) feeding a main flow of molten thermoplastic resin to the manifold and a coloured flow of the same resin to the passage; (f) extruding both flows simultaneously to form a layer of colour resin that is greater in width than the orifice in said passage, which tapers in thickness as a result of widthwise flow of the first resin, and which is completely encapsulated within a main flow of the molten resins; and (g) extruding the combined flows through the slit-shaped dye orifice to produce a shape with an encapsulated gradient colour band. The first thermoplastic resin is preferably transparent. Figures 17 and 20 illustrate the relationship between the colour band size and the light transmission, corresponding to the transmittance. Especially, in Table 2, the colour width is the width of the coloured band and the shade width shows the width of the coloured band shown in Figure 17 in which the transmissivity ratio is 70-40%.

### SUMMARY OF THE INVENTION

### PROBLEMS TO BE SOLVED BY THE INVENTION

The interlayer films in Patent Documents 2 and 3 are provided with appearance designability by a gradation pattern.

The interlayer films as described in Patent Documents 2 and 3 are often formed by extrusion molding. In this

case, the extruded interlayer film has a long shape, and has a lengthwise direction and a widthwise direction. In the interlayer film, a gradation pattern in which the color tone varies is provided in the direction connecting one end and the other end in the widthwise direction. The extruded interlayer film can be wound into a roll shape to form a roll body before production of laminated glass.

Also, the interlayer film is cut at predetermined intervals in the lengthwise direction at the time of production of laminated glass. Then, each of the plurality of cut interlayer films is arranged between two glass plates, and thus a plurality of laminated glasses are produced.

The present inventors made diligent efforts, and found that in conventional interlayer films, the width of the region where a gradation pattern is provided varies in the lengthwise direction of the interlayer film. The present inventors found that the width of the region provided with a gradation pattern varies in a plurality of laminated glasses produced by using a plurality of cut interlayer films.

A conventional interlayer film provided with a gradation pattern is frequently used for providing a windshield for vehicle with anti-glare property. In such use of laminated glass, the lengths of the interlayer film and the laminated glass are limited, so that it is relatively rare that variation in the width of the region where the gradation pattern is provided is problematic.

Meanwhile, when laminated glass is used as handrail glass, several to several tens of laminated glasses are arranged in line. In such use of laminated glass, variation in the width of the region where the gradation pattern is provided in the interlayer film becomes obvious, and in a structure in which a plurality of the laminated glasses are arranged in line, the appearance designability is impaired due to partial misalignment in color width of the gradation pattern or the like.

It is an object of the present invention to provide an interlayer film for laminated glass and a roll body capable of obtaining a plurality of laminated glasses having excellent appearance designability.

It is also an object of the present invention to provide a method for producing a laminated glass set using the interlayer film for laminated glass.

## MEANS FOR SOLVING THE PROBLEMS

According to a broad aspect of the present invention, there is provided an interlayer film for laminated glass (hereinafter, sometimes described as interlayer film) having a lengthwise direction and a widthwise direction, and a length of 30 m or more in the lengthwise direction, the interlayer film having a colored part, the colored part having a gradation part where visible light transmittance increases from one end side toward the other end side in the widthwise direction, the gradation part forming a tip of the colored part on the other end side in the widthwise direction, when distance X from one end in the widthwise direction to a tip of the colored part on the other end side in the widthwise direction is measured in the lengthwise direction at 1.5 m intervals, and a maximum value of distance X is denoted by $X_{max}$, a minimum value of distance X is denoted by $X_{min}$, and an average value of distance X is denoted by $X_{ave}$, the interlayer film satisfying the following formula (1), or when distance Y from a tip of the colored part on one end side in the widthwise direction to a tip of the colored part on the other end side in the widthwise direction is measured in the lengthwise direction at 1.5 m intervals, and a maximum value of distance Y is denoted by $Y_{max}$, a minimum value of distance Y is denoted by $Y_{min}$, and an average value of distance Y is denoted by $Y_{ave}$, the interlayer film satisfying the following formula (2).

$$(|X_{max} - X_{min}|)/X_{ave} \leq 0.1 \quad \text{Formula (1)}$$

$$(|Y_{max} - Y_{min}|)/Y_{ave} \leq 0.1 \quad \text{Formula (2)}$$

In a specific aspect of the interlayer film according to the present invention, the interlayer film satisfies the formula (1).

In a specific aspect of the interlayer film according to the present invention, the $X_{min}$ is 0.6 m or more.

In a specific aspect of the interlayer film according to the present invention, a tip of the colored part on one end side in the widthwise direction reaches one end in the widthwise direction.

In a specific aspect of the interlayer film according to the present invention, the interlayer film satisfies the formula (2).

In a specific aspect of the interlayer film according to the present invention, the $Y_{min}$ is 0.6 m or more.

In a specific aspect of the interlayer film according to the present invention, when distance Z of the gradation part in a direction connecting one end and the other end in the widthwise direction is measured at 1.5 m intervals in the lengthwise direction, and a maximum value of distance Z is denoted by $Z_{max}$, a minimum value of distance Z is denoted by $Z_{min}$, an average value of distance Z is denoted by $Z_{ave}$, the interlayer film satisfies the following formula (3).

$$(|Z_{max} - Z_{min}|)/Z_{ave} \leq 0.1 \quad \text{Formula (3)}$$

In a specific aspect of the interlayer film according to the present invention, the colored part has a dark color part located closer to one end in the widthwise direction than the gradation part.

In a specific aspect of the interlayer film according to the present invention, the interlayer film includes a first resin layer and a second resin layer, the first resin layer is arranged on a first surface side of the second resin layer, the second resin layer contains a coloring agent, and the second resin layer forms the colored part.

In a specific aspect of the interlayer film according to the present invention, the coloring agent includes calcium carbonate particles.

According to a broad aspect of the present invention, there is provided a roll body including a winding core and the above-described interlayer film for laminated glass, the interlayer film for laminated glass being wound around an outer periphery of the winding core in the lengthwise direction of the interlayer film for laminated glass.

According to a broad aspect of the present invention, there is provided a method for producing a laminated glass set, the method comprising: a step of cutting one of the interlayer film for laminated glass in the lengthwise direction to obtain a plurality of cut pieces, and a step of preparing a plurality of first lamination glass members and a plurality of second lamination glass members for obtaining a plurality of laminated glasses, and arranging each cut piece as an interlayer film part between each of the first lamination glass members and each of the second lamination glass members to obtain a plurality of laminated glasses.

## EFFECT OF THE INVENTION

The interlayer film for laminated glass according to the present invention has a lengthwise direction and a widthwise direction, and has a length of 30 m or more in the lengthwise direction. The interlayer film for laminated glass according to the present invention has a colored part. In the interlayer film for laminated glass according to the present invention, the colored part has a gradation part where visible light transmittance increases from one end side toward the other end side in the widthwise direction. In the interlayer film for laminated glass according to the present invention, the gradation part forms a tip of the colored part on the other end side in the widthwise direction. In the interlayer film for laminated glass according to the present invention, distance X from one end in the widthwise direction to a tip of the colored part on the other end side in the widthwise direction is measured in the lengthwise direction at 1.5 m intervals, and a maximum value of distance X is denoted by $X_{max}$, a minimum value of distance X is denoted by $X_{min}$, and an average value of distance X is denoted by $X_{ave}$. In the interlayer film for laminated glass according to the present invention, distance Y from a tip of the colored part on one end side in the widthwise direction to a tip of the colored part on the other end side in the widthwise direction is measured in the lengthwise direction at 1.5 m intervals, and a maximum value of distance Y is denoted by $Y_{max}$, a minimum value of distance Y is denoted by $Y_{min}$, and an average value of distance Y is denoted by $Y_{ave}$. In the interlayer film for laminated glass according to the present invention, the interlayer film satisfies the above formula (1) or satisfies the above formula (2). Since the interlayer film for laminated glass according to the present invention is provided with the aforementioned configuration, it is possible to obtain a plurality of laminated glasses having excellent appearance designability by using the interlayer film according to the present invention.

## BRIEF DESCRIPTION OF DRAWINGS

[Fig. 1] Fig. 1 is a sectional view schematically showing an interlayer film for laminated glass in accordance with a first embodiment of the present invention.

[Fig. 2] Fig. 2 is a sectional view schematically showing a laminated glass prepared with the interlayer film for laminated glass shown in Fig. 1.

[Fig. 3] Fig. 3 is a perspective view schematically showing a roll body prepared by winding the interlayer film for laminated glass shown in Fig. 1.

[Fig. 4] Fig. 4 is a perspective view schematically showing a partially developed state of a roll body prepared by winding the interlayer film for laminated glass shown in Fig. 1.

[Fig. 5] Fig. 5 is a sectional view schematically showing an interlayer film for laminated glass in accordance with a second embodiment of the present invention.

[Fig. 6] Fig. 6 is a sectional view schematically showing a laminated glass prepared with the interlayer film for laminated glass shown in Fig. 5.

[Fig. 7] Fig. 7 is a perspective view schematically showing a roll body prepared by winding the interlayer film for laminated glass shown in Fig. 5.

[Fig. 8] Fig. 8 is a perspective view schematically showing a partially developed state of a roll body prepared by winding the interlayer film for laminated glass shown in Fig. 5.

[Fig. 9] Fig. 9 is a sectional view schematically showing an interlayer film for laminated glass in accordance with a third embodiment of the present invention.

[Fig. 10] Fig. 10 is a sectional view schematically showing a laminated glass prepared with the interlayer film for laminated glass shown in Fig. 9.

[Fig. 11] Fig. 11 is a perspective view schematically showing a roll body prepared by winding the interlayer film for laminated glass shown in Fig. 9.

[Fig. 12] Fig. 12 is a perspective view schematically showing a partially developed state of a roll body prepared by winding the interlayer film for laminated glass shown in Fig. 9.

[Fig. 13] Fig. 13 is a sectional view schematically showing an interlayer film for laminated glass in accordance with a fourth embodiment of the present invention.

[Fig. 14] Fig. 14 is a sectional view schematically showing a laminated glass prepared with the interlayer film for laminated glass shown in Fig. 13.

[Fig. 15] Fig. 15 is a sectional view schematically showing an interlayer film for laminated glass in accordance with a fifth embodiment of the present invention.

[Fig. 16] Fig. 16 is a sectional view schematically showing a laminated glass prepared with the interlayer film for laminated glass shown in Fig. 15.

[Fig. 17] Fig. 17 is a sectional view schematically showing an interlayer film for laminated glass in accordance with a sixth embodiment of the present invention.

[Fig. 18] Fig. 18 is a sectional view schematically showing a laminated glass prepared with the interlayer film for laminated glass shown in Fig. 17.

[Fig. 19] Fig. 19 is a sectional view schematically showing an interlayer film for laminated glass in accordance with a seventh embodiment of the present invention.

[Fig. 20] Fig. 20 is a sectional view schematically showing a laminated glass prepared with the interlayer film for laminated glass shown in Fig. 19.

[Fig. 21] Fig. 21 is a sectional view schematically showing an interlayer film for laminated glass in accordance with an eighth embodiment of the present invention.

[Fig. 22] Fig. 22 is a sectional view schematically showing a laminated glass prepared with the interlayer film for laminated glass shown in Fig. 21.

[Fig. 23] Fig. 23 is a front view showing a laminated glass set including a plurality of laminated glasses shown in Fig. 2.

[Fig. 24] Fig. 24 is a front view showing the first example of a laminated glass structure using the laminated glass set shown in Fig. 23.

[Fig. 25] Fig. 25 is a front view showing the second example of a laminated glass structure using the laminated glass set shown in Fig. 23.

[Fig. 26] Fig. 26 is a front view showing a laminated glass structure prepared with a conventional interlayer film for laminated glass.

## MODES FOR CARRYING OUT THE INVENTION

Hereinafter, the present invention will be described in detail.

The interlayer film for laminated glass according to the present invention (hereinafter, sometimes described as interlayer film) has a lengthwise direction and a widthwise direction, and has a length of 30 m or more in the lengthwise direction. The interlayer film according to the present invention has one end on one side in the lengthwise direction, and the other end on the other side in the lengthwise direction. The one end and the other end are end parts of both sides facing each other in the lengthwise direction of the interlayer film. The interlayer film according to the present invention has one end on one side in the widthwise direction, and the other end on the other side in the widthwise direction. The one end and the other end are end parts of both sides facing each other in the widthwise direction of the interlayer film.

The interlayer film according to the present invention has a colored part. The colored part extends from one end side toward the other end side in the widthwise direction of the interlayer film.

In the interlayer film according to the present invention, the colored part has a gradation part where visible light transmittance increases from one end side toward the other end side in the widthwise direction of the interlayer film. The gradation part is a part where visible light transmittance increases from one end side toward the other end side in the widthwise direction of the interlayer film. By the variation in visible light transmittance, the color tone of the gradation part varies. For example, in the gradation part, the color tone becomes lighter from one end side toward the other end side in the widthwise direction of the interlayer film.

The gradation part forms a tip of the colored part on the other end side in the widthwise direction of the interlayer film. The tip of the part where visible light transmittance increases from one end side toward the other end side in the

widthwise direction of the interlayer film is the tip of the gradation part.

Distance X from one end in the widthwise direction to a tip of the colored part on the other end side in the widthwise direction of the interlayer film is measured in the lengthwise direction at 1.5 m intervals. In the interlayer film according to the present invention, a maximum value of distance X is denoted by $X_{max}$, a minimum value of distance X is denoted by $X_{min}$, and an average value of distance X is denoted by $X_{ave}$. It is preferred that the interlayer film according to the present invention satisfy the following formula (1). That is, in the interlayer film according to the present invention, it is preferred that a ratio of an absolute value of difference between $X_{max}$ and $X_{min}$, to $X_{ave}$ be 0.1 or less.

$$(|X_{max} - X_{min}|)/X_{ave} \leq 0.1 \quad \text{Formula (1)}$$

Distance Y from a tip of the colored part on one end side in the widthwise direction to a tip of the colored part on the other end side in the widthwise direction of the interlayer film is measured in the lengthwise direction at 1.5 m intervals. In the interlayer film according to the present invention, a maximum value of distance Y is denoted by $Y_{max}$, a minimum value of distance Y is denoted by $Y_{min}$, and an average value of distance Y is denoted by $Y_{ave}$. It is preferred that the interlayer film according to the present invention satisfy the following formula (2). That is, in the interlayer film according to the present invention, it is preferred that a ratio of an absolute value of difference between $Y_{max}$ and $Y_{min}$, to $Y_{ave}$ be 0.1 or less.

$$(|Y_{max} - Y_{min}|)/Y_{ave} \leq 0.1 \quad \text{Formula (2).}$$

The interlayer film according to the present invention may satisfy the formula (1), may satisfy the formula (2), or may satisfy both the formula (1) and the formula (2).

Since the interlayer film according to the present invention is provided with the aforementioned configuration, it is possible to obtain a plurality of laminated glasses having excellent appearance designability.

From the viewpoint of further enhancing the appearance designability, it is preferred that the interlayer film satisfy both the formula (1) and the formula (2).

Distance Z of the gradation part in a direction connecting one end and the other end in the widthwise direction of the interlayer film is measured at 1.5 m intervals in the lengthwise direction of the interlayer film. In the interlayer film according to the present invention, a maximum value of distance Z is denoted by $Z_{max}$, a minimum value of distance Z is denoted by $Z_{min}$, and an average value of distance Z is denoted by $Z_{ave}$. It is preferred that the interlayer film according to the present invention satisfy the following formula (3). That is, in the interlayer film according to the present invention, it is preferred that a ratio of an absolute value of difference between $Z_{max}$ and $Z_{min}$, to $Z_{ave}$ be 0.1 or less. In this case, it is possible to further enhance the appearance designability.

$$(|Z_{max} - Z_{min}|)/Z_{ave} \leq 0.1 \quad \text{Formula (3).}$$

Specifically, the distance X, the distance Y, and the distance Z are measured in the sequence of the following 1) to 5) .

1) Setting of divisional position (A) and divisional position (B)

Taking a certain position on one end side in the lengthwise direction of the interlayer film as a starting position, divisional positions (A) are set at 1.5 m intervals from one end toward the other end in the lengthwise direction of the interlayer film. Next, divisional positions (B) are set at positions of 20 cm from divisional positions (A) toward the other end side in the lengthwise direction of the interlayer film. Since the interlayer film according to the present invention has a length of 30 m or more in the lengthwise direction, it is possible to set sequentially 20 or more divisional positions (A) and divisional positions (B). Regarding the starting position, the position of one end in the lengthwise direction of the interlayer film may be selected as the starting position, or a position distanced from one end in the lengthwise direction of the interlayer film may be selected as the starting position. The starting position is preferably a position of 10 m or less from one end toward the other end in the lengthwise direction of the interlayer film, more preferably a position of 5 m or less from one end toward the other end in the lengthwise direction of the interlayer film, and especially preferably the position of one end in the lengthwise direction of the interlayer film.

2) Cutting out of interlayer film

In each divisional position (A) and each divisional position (B), the interlayer film is cut out to obtain an interlayer film sample of 20 cm in the short-side direction (the lengthwise direction of the interlayer film), and having a long-side dimension and a thickness that are identical to the width and the thickness of the interlayer film. For cutting out the interlayer film, a single-edged razor blade can be used. Since the interlayer film according to the present invention has a length of 30 m or more in the lengthwise direction, 20 or more interlayer film samples are obtained.

3) Preparation of laminated glass for measurement of visible light transmittance:

Each obtained interlayer film sample is sandwiched between two sheets of clear glass in conformity with JIS R3202:2011 and having a visible light transmittance of 90.4% and a thickness of 2.5 mm, to prepare a laminated glass for measurement of visible light transmittance. Since 20 or more interlayer film samples are obtained, the number of obtained laminated glasses for measurement of visible light transmittance is also 20 or more. Regarding the short-side and long-side dimensions of the aforementioned clear glass, it is preferred that the short- side dimension be 20 cm, and the long-side dimension be identical to the width of the interlayer film. However, when it is difficult to prepare a clear glass having these dimensions, the interlayer film sample may further be cut out in the long-side direction or in the short-side direction to prepare a laminated glass for measurement of visible light transmittance.

4) Measurement of visible light transmittance

Using a spectrophotometer (for example, "U-4100" available from Hitachi High-Tech Science Corporation), visible light transmittance (Tv) of each obtained laminated glass for measurement of visible light transmittance is measured. Specifically, a laminated glass for measurement of visible light transmittance is placed at a position 13 cm apart from the integrating sphere on the optical path between the light source and the integrating sphere, in parallel with the normal line of the light axis so that only the parallel light having penetrated the laminated glass for measurement of visible light transmittance is received by the integrating sphere, and spectral transmittance is measured. From the obtained spectral transmittance, visible light transmittance of the laminated glass for measurement of visible light transmittance is calculated. In the same manner, visible light transmittance is calculated for all the laminated glasses for measurement of visible light transmittance. In this manner, visible light transmittance of the laminated glass for measurement of visible light transmittance is measured along the widthwise direction of the interlayer film, and for each laminated glass for measurement of visible light transmittance, the maximum value ($Tv_{max}$) and the minimum value ($Tv_{min}$) of visible light transmittance are determined. The measurement conditions include a scan speed: 300 nm/min, and a slit width: 8 nm, and other measurement conditions conform to JIS R3106:1998.

5) Measurement of distance X, distance Y, and distance Z

From the measurement results of visible light transmittance, interlayer film samples in each laminated glass for measurement of visible light transmittance are segmented into the following regions.

Light color part: the region where Tv is more than ($0.1Tv_{min} + 0.9Tv_{max}$), and $Tv_{max}$ or less
Gradation part (also described as first gradation part for distinction from the later-described second gradation part) : the region where Tv is ($0.9Tv_{min} + 0.1Tv_{max}$) or more, and ($0.1Tv_{min} + 0.9Tv_{max}$) or less, and Tv increases from one end side toward the other end side of the interlayer film
Second gradation part: the region where Tv is ($0.9Tv_{min} + 0.1Tv_{max}$) or more, and ($0.1Tv_{min} + 0.9Tv_{max}$) or less, and Tv increases from the other end side toward one end side of the interlayer film
Dark color part: the region where Tv is $Tv_{min}$ or more, and less than ($0.9Tv_{min} + 0.1Tv_{max}$)
Colored part: the combined region of the dark color part and the gradation part

According to the above segmentation, distance X, distance Y, and distance Z are determined.

Distance X: the distance from one end in the widthwise direction of the interlayer film to the colored part in the other end side in the widthwise direction of the interlayer film More specifically, distance X is "the distance from one end in the widthwise direction of the interlayer film to the boundary between the light color part and the gradation part".

Distance Y: the distance from a tip of a colored part on one end side in the widthwise direction of the interlayer film, to a tip of a colored part on the other end side in the widthwise direction of the interlayer film More specifically, distance Y is "the distance of the colored part in the direction connecting one end and the other end in the widthwise direction of the interlayer film". Even when the gradation part forms both sides of the colored part (for example, when

the gradation part, the dark color part and the gradation part align in this sequence), distance Y is the distance of the colored part including two gradation parts in the direction connecting one end and the other end in the widthwise direction of the interlayer film.

Distance Z: the distance of gradation part in the direction connecting one end and the other end in the widthwise direction of the interlayer film

In interlayer film samples in all the obtained laminated glasses for measurement of visible light transmittance, distance X, distance Y, and distance Z are determined. Therefore, distance X, distance Y, and distance Z are determined in the number of prepared laminated glasses for measurement of visible light transmittance. From each obtained distance X, a maximum value $X_{max}$ of distance X, a minimum value $X_{min}$ of distance X, and an average value $X_{ave}$ of distance X are determined. From each obtained distance Y, a maximum value $Y_{max}$ of distance Y, a minimum value $Y_{min}$ of distance Y, and an average value $Y_{ave}$ of distance Y are determined. From each obtained distance Z, a maximum value $Z_{max}$ of distance Z, a minimum value $Z_{min}$ of distance Z, and an average value $Z_{ave}$ of distance Z are determined.

It is sometimes the case that the distance X and the distance Y coincide with each other in one interlayer film, for example, when the colored part reaches one end in the widthwise direction of the interlayer film.

The interlayer film according to the present invention may include the colored part as a first colored part, and may include a second colored part having a gradation part where visible light transmittance increases from the other end side toward one end side in the widthwise direction of the interlayer film.

The interlayer film according to the present invention may have a one-layer structure or a two or more-layer structure. The interlayer film according to the present invention may have a two-layer structure, may have a three-layer structure, and may have a four-layer structure. When the interlayer film according to the present invention has a two or more-layer structure, the whole interlayer film need not have a two or more-layer structure, and the interlayer film may partly have a one-layer structure in the direction perpendicular to the thickness direction of the interlayer film.

It is preferred that the interlayer film according to the present invention include a first resin layer and a second resin layer, and the first resin layer be arranged on a first surface side of the second resin layer. It is preferred that the second resin layer contain a coloring agent. It is preferred that the second resin layer form the colored part.

From the viewpoint of suppressing degradation in color tone, in the interlayer film according to the present invention, it is preferred that the first resin layer be arranged on a second surface side opposite to the first surface side of the second resin layer. From the viewpoint of suppressing degradation in color tone, it is preferred that the second resin layer be embedded in the first resin layer. In this case, it is preferred that the second resin layer contain a coloring agent, and the second resin layer form the colored part.

From the viewpoint of suppressing degradation in color tone, in the interlayer film according to the present invention, it is preferred that the first resin layer be arranged on the first surface side of the second resin layer, and the first resin layer be arranged on the second surface side of the second resin layer. From the viewpoint of suppressing degradation in color tone, it is preferred that the second resin layer be arranged between the first resin layers. In this case, it is preferred that the second resin layer contain a coloring agent, and the second resin layer form the colored part.In this case, it is preferred that the second resin layer contain a coloring agent, and the second resin layer form the colored part.

It is preferred that the interlayer film according to the present invention include a first resin layer, a second resin layer and a third layer, the first resin layer be arranged on a first surface side of the second resin layer, and the third resin layer be arranged on a second surface side opposite to the first surface of the second resin layer. In this case, it is preferred that the second resin layer contain a coloring agent, and the second resin layer form the colored part.In this case, it is preferred that the second resin layer contain a coloring agent, and the second resin layer form the colored part.

It is also preferred that the interlayer film according to the present invention include a first resin layer, a second resin layer, a third resin layer and a fourth resin layer, the second resin layer be embedded in the first resin layer, the third resin layer be arranged on a first surface side of the first resin layer, and the fourth resin layer be arranged on a surface opposite to the first resin layer of the third resin layer. In this case, it is preferred that the second resin layer contain a coloring agent, and the second resin layer form the colored part.In this case, it is preferred that the second resin layer contain a coloring agent, and the second resin layer form the colored part. In this case, the first resin layer and the third resin layer may be directly laminated, or a functional film or the like as will be described later may be arranged between the first resin layer and the third resin layer.

Further, it is also preferred that the interlayer film according to the present invention include a first resin layer, a second resin layer, a third resin layer and a fourth resin layer, the second resin layer be embedded in the first resin layer, the fourth resin layer be embedded in the third resin layer, and the third resin layer and the fourth resin layer be arranged on a first surface side of the first resin layer. In this case, it is preferred that the second resin layer and the fourth resin layer contain a coloring agent, and the second resin layer and the fourth resin layer form the colored part. In this case, the first resin layer and the third resin layer may be directly laminated, or a functional film or the like as will be described later may be arranged between the first resin layer and the third resin layer.

The first resin layer, the second resin layer, the third resin layer and the fourth resin layer may have the same

composition, or may have different compositions.

The third resin layer may be, but not limited to, a resin layer having excellent sound insulating property. The third resin layer may be a sound insulating layer. When the third resin layer is a sound insulating layer, it is possible to improve the sound insulating property and the appearance designability of the laminated glass.

When an interlayer film including the third resin layer is produced, the width of the colored part is more likely to vary in the obtained interlayer film. In order to reduce the variation in the width of the colored part, it is necessary to finely control the inlet pressure variation during production.

It is preferred that the interlayer film has an MD direction and a TD direction. For example, the interlayer film is obtained by melt extrusion molding. The MD direction is a flow direction of an interlayer film at the time of producing the interlayer film. The TD direction is a direction orthogonal to the flow direction of an interlayer film at the time of producing the interlayer film and a direction orthogonal to the thickness direction of the interlayer film. The lengthwise direction of the interlayer film is usually the MD direction. The widthwise direction of the interlayer film is usually the TD direction.

The lengthwise direction and the widthwise direction of the interlayer film in the present specification mean the directions in the interlayer film before production of a laminated glass, and mean the directions in the interlayer film before cutting. After cutting of the interlayer film, the lengthwise direction of the interlayer film after cutting (cut piece) may be shorter than the widthwise direction of the interlayer film after cutting (cut piece). The lengthwise direction of the interlayer film before cutting may correspond to the lengthwise direction of the laminated glass, or may correspond to the widthwise direction of the laminated glass. The widthwise direction of the interlayer film before cutting may correspond to the widthwise direction of the laminated glass, or may correspond to the lengthwise direction of the laminated glass.

The interlayer film has a length (L) of 30 m or more in the lengthwise direction. From the viewpoint of further enhancing the production efficiency of the interlayer film and the laminated glass, the length (L) is preferably 50 m or more, more preferably 100 m or more, still more preferably 150 m or more, further preferably 250 m or more, still further preferably 500 m or more, most preferably 1000 m or more. From the viewpoint of further enhancing the handleability of the interlayer film, the length (L) may be 2000 m or less, may be 1000 m or less, or may be 600 m or less.

In the interlayer film, the width (W) (widthwise dimension) is smaller than the length (L) (lengthwise dimension). From the viewpoint of further enhancing the handleability of the interlayer film, the width (W) is preferably 0.8 m or more, more preferably 1.0 m or more, further preferably 1.2 m or more, and is preferably 2.0 m or less, more preferably 1.8 m or less, further preferably 1.5 m or less.

From the viewpoint of further enhancing the handleability of the interlayer film, a ratio of the length (L) to the width (W) (length (L)/width (W)) is preferably 100 or more, more preferably 200 or more, further preferably 300 or more, and is preferably 2000 or less, more preferably 1000 or less, further preferably 500 or less.

From the viewpoint of further improving the appearance designability, a value of $(|X_{max} - X_{min}|)/X_{ave}$ is preferably 0.1 or less, more preferably 0.09 or less, still more preferably 0.07 or less, further preferably 0.05 or less, especially preferably 0.03 or less, most preferably 0.01 or less.

From the viewpoint of further improving the appearance designability, a value of $|X_{max} - X_{min}|$ is preferably 80 mm or less, more preferably 16 mm or less, further preferably 10 mm or less.

The $X_{min}$ is preferably 0.1 m or more, more preferably 0.3 m or more, still more preferably 0.6 m or more, further preferably 0.8 m or more, especially preferably 1.0 m or more, most preferably 1.5 m or more. When the $X_{min}$ is the above lower limit or more, it is possible to ensure the privacy protectability with a large area. When the colored part is long, the length of the colored part is more likely to vary. However, in the present invention, since the variation in length of the colored part is controlled with high accuracy, it is possible to enhance the appearance designability of the laminated glass and the laminated glass set.

A ratio of $X_{min}$ to the width (W) of the interlayer film ($X_{min}$/width of interlayer film (W)) may be 0.9 or less, may be 0.8 or less, may be 0.7 or less, may be 0.6 or less, may be 0.5 or less, may be 0.3 or less, or may be 0.1 or less.

From the viewpoint of further improving the appearance designability, a value of $(|Y_{max} - Y_{min}|)/Y_{ave}$ is preferably 0.1 or less, more preferably 0.09 or less, still more preferably 0.07 or less, further preferably 0.05 or less, especially preferably 0.03 or less, most preferably 0.01 or less.

From the viewpoint of further improving the appearance designability, a value of $|Y_{max} - Y_{min}|$ is preferably 80 mm or less, more preferably 16 mm or less, further preferably 10 mm or less.

The $Y_{min}$ is preferably 0.1 m or more, more preferably 0.3 m or more, still more preferably 0.6 m or more, further preferably 0.8 m or more, especially preferably 1.0 m or more, most preferably 1.5 m or more. When the $Y_{min}$ is the above lower limit or more, it is possible to ensure the privacy protectability with a large area. When the colored part is long, the length of the colored part is more likely to vary. However, in the present invention, since the variation in length of the colored part is controlled with high accuracy, it is possible to enhance the appearance designability of the laminated glass.

A ratio of $Y_{min}$ to the width (W) of the interlayer film ($Y_{min}$/width of interlayer film (W)) may be 0.9 or less, may be 0.8 or less, may be 0.5 or less, may be 0.3 or less, or may be 0.1 or less.

From the viewpoint of further improving the appearance designability, a value of $(|Z_{max} - Z_{min}|)/Z_{ave}$ is preferably 0.1 or less, more preferably 0.07 or less, further preferably 0.05 or less, especially preferably 0.02 or less, most preferably 0.01 or less.

The $Z_{min}$ is preferably 0.001 m or more, more preferably 0.01 m or more, still more preferably 0.03 m or more, further preferably 0.1 m or more, still further preferably 0.3 m or more, especially preferably 0.5 m or more, most preferably 1 m or more. When the $Z_{min}$ is the above lower limit or more, a gradation pattern is formed in a large area, and the appearance designability can be further improved.

A ratio of $Z_{min}$ to the width (W) of the interlayer film ($Z_{min}$/width of interlayer film (W)) may be 0.9 or less, may be 0.5 or less, may be 0.3 or less, may be 0.1 or less, or may be 0.05 or less.

As a method for setting the value of $(|X_{max} - X_{min}|)/X_{ave}$, the value of $(|Y_{max} - Y_{min}|)/Y_{ave}$, and the value of $(|Z_{max} - Z_{min}|)/Z_{ave}$ fall within the aforementioned preferred ranges, a method of controlling the extrusion conditions with high accuracy in extrusion molding the interlayer film is recited.

In a conventional method for producing an interlayer film, the extrusion conditions are controlled with somewhat high accuracy. For example, in a conventional method for producing an interlayer film, variation in the widthwise direction of the colored part caused by oscillation of the extrusion pressure in a short period is detected during extrusion from the mold. Therefore, even with a conventional method for producing an interlayer film, it is possible to control the variation in the width of the colored part in a short period to some extent. The present inventors found that in a conventional method for producing an interlayer film, it is impossible to detect the variation in the widthwise direction of the colored part caused by oscillation of the extrusion pressure in a long period, and as a result, the variation in the width of the colored part in a long period is not controlled.

As a method for controlling the extrusion conditions with high accuracy in extrusion molding the interlayer film according to the present invention, specifically, the following method can be recited.

A first resin composition mainly for forming a light color part is prepared. Also, a first extruder for kneading and extruding the first resin composition is prepared. Also, a second resin composition mainly for forming a colored part and containing a coloring agent is prepared. Also, a second extruder for kneading and extruding the second resin composition is prepared.

It is preferred that the method for producing an interlayer film include a step of converging and laminating the first resin composition extruded from the first extruder and the second resin composition extruded from the second extruder by means of a feed block, and molding the compositions by extruding from the die.

Since oscillation in the extrusion pressure at the time of confluence and lamination causes variation in the flow amount from each extruder at the time of confluence, the thickness and the width of the first resin layer formed of the first resin composition, and the thickness and the width of the second resin layer formed of the second resin composition vary, resulting that the width of the colored part in the interlayer film extruded from the die tends to vary. Therefore, it is important to suppress the oscillation in the extrusion pressure.

The present inventors focused on suppressing the variation in the extrusion pressure in a long period, that has not been required heretofore. As a result of diligent efforts, the present inventors found that suppressing the variation in extrusion of the first resin composition is especially effective, and as a measure, by suppressing the variation in the inlet pressure, measured with a pressure gauge installed in the inlet of the gear pump, in a much longer period than ever before, it is possible to suppress the variation in the width of the colored part in a long period. Specifically, the present inventors found that by controlling the difference between the maximum value and the minimum value of the inlet pressure for 180 seconds to a certain value or less, it is possible to suppress the variation in the width of the colored part due to the variation in inlet pressure of a long term than ever before, and it is possible to produce the interlayer film according to the present invention. The present inventors also found that the variation in the width of the colored part can be suppressed more effectively by installing two gear pumps in series, and further reducing the variation in inlet pressure of the gear pump installed on the downstream side.

The gradation part can be prepared in the following method and the like. Method of decreasing the thickness of the second resin layer from one end side toward the other end side in the widthwise direction of the interlayer film. Method of decreasing the concentration of the coloring agent in the second resin layer from one end side toward the other end side in the widthwise direction of the interlayer film.

The gradation part is, for example, a part where the thickness of the second resin layer decreases from one end side toward the other end side in the widthwise direction of the interlayer film, or a part where the concentration of the coloring agent in the second resin layer decreases from one end side toward the other end side in the widthwise direction of the interlayer film. From the viewpoint of further improving the gradation state, it is preferred that the gradation part be a part where the thickness of the second resin layer decreases from one end side toward the other end side in the widthwise direction of the interlayer film.

It is preferred that the colored part reach one end in the widthwise direction of the interlayer film. That is, it is preferred that a tip of the colored part on one end side in the widthwise direction of the interlayer film reach one end in the widthwise direction. It is to be noted that the colored part need not reach one end in the widthwise direction of the

interlayer film. The colored part, which fails to reach the other end in the widthwise direction of the interlayer film, is capable of moderately increasing the visible light transmittance of the laminated glass, and increasing the visibility through the laminated glass on the other end side in the widthwise direction of the interlayer film.

The colored part may have the dark color part from one end side toward the other end side in the widthwise direction of the interlayer film. The dark color part is located closer to one end in the widthwise direction of the interlayer film than the gradation part. It is preferred that visible light transmittance of the dark color part be uniform.

A part where visible light transmittance increases from one end side toward the other end side in the widthwise direction of the interlayer film is called a first gradation part. The colored part may have a second gradation part where visible light transmittance increases from the other end side toward one end side in the widthwise direction of the interlayer film. The second gradation part is located closer to one end in the widthwise direction of the interlayer film than the first gradation part.

The colored part may have a dark color part from one end side toward the other end side in the widthwise direction of the interlayer film between the first gradation part and the second gradation part.

The interlayer film may have a light color part. The light color part may contain a coloring agent, or need not contain a coloring agent. The light color part may be a part of the first resin layer, or may be a part of the second resin layer containing a coloring agent.

Two sheets of clear glass in conformity with JIS R3202:2011 and having a visible light transmittance of 90.4% are prepared. An interlayer film is arranged between the two sheets of clear glass to obtain a laminated glass. The obtained laminated glass is referred to as a laminated glass (L) .

The laminated glass (L) preferably has a part having a visible light transmittance of 10% or less, more preferably has a part having a visible light transmittance of 5% or less, and further preferably has a part having a visible light transmittance of 1% or less. The part where visible light transmittance is the above upper limit or less may be the dark color part, or may be part of the gradation part. When the part having a visible light transmittance of the above upper limit or less is provided, it is possible to favorably provide the obtained laminated glass with privacy protectability.

The laminated glass (L) preferably has a part having a visible light transmittance of 20% or more, more preferably has a part having a visible light transmittance of 40% or more, further preferably has a part having a visible light transmittance of 60% or more, and most preferably has a part having a visible light transmittance of 70% or more. The part where visible light transmittance is the above lower limit or more may be a part free of the colored part, or may be a light color part, or may be a part of the gradation part. When the part having a visible light transmittance of the above lower limit or more is provided, it is possible to favorably provide the obtained laminated glass with transparency.

The visible light transmittance means visible light transmittance of the laminated glass at a wavelength of 380 nm to 780 nm. The visible light transmittance can be measured using a spectrophotometer ("U-4100" available from Hitachi High-Tech Science Corporation) in conformity with JIS R3106:1998.

From the viewpoint of further improving the appearance designability, when the interlayer film is planarly viewed, the area of the part where the colored part exists in 100% of the total area of the interlayer film is preferably 5% or more, more preferably 10% or more, still more preferably 15% or more, further preferably 20% or more. When the interlayer film is planarly viewed, the area of the part where the colored part exists in 100% of the total area of the interlayer film may be 30% or more, may be 40% or more, or may be 50% or more. When the interlayer film part is planarly viewed, the area of the part where the colored part exists in 100% of the total area of the interlayer film may be 90% or less, may be 80% or less, may be 70% or less, may be 60% or less, or may be 50% or less. The area of the part where the colored part exists may be a proportion of distance Y of the colored part to the distance from one end to the other end of the interlayer film in the measurement of visible light transmittance of the laminated glass. That is,

area of part where colored part exists (%) = (distance Y of colored part)/(distance from one end to the other end of interlayer film) $\times$ 100

may be determined, and regarded as an area of the part where the colored part exists in 100% of the total area of the interlayer film.

From the viewpoint of further improving the appearance designability, when the laminated glass (L) is planarly viewed, the area of the part where visible light transmittance is 60% or less in 100% of the total area of the laminated glass (L) is preferably 5% or more, more preferably 10% or more, still more preferably 15% or more, further preferably 20% or more. When the laminated glass (L) is planarly viewed, the area of the part where visible light transmittance is 60% or less in 100% of the total area of the laminated glass (L) may be 30% or more, may be 40% or more, or may be 50% or more. When the laminated glass (L) is planarly viewed, the area of the part where visible light transmittance is 60% or less in 100% of the total area of the interlayer film may be 90% or less, may be 80% or less, may be 70% or less, may be 60% or less, or may be 50% or less. The area of the part where visible light transmittance is 60% or less may be a proportion of the distance of the region where visible light transmittance is 60% or less to the distance from one end to the other end of the interlayer film in measurement of visible light transmittance of the laminated glass. That is,

area of part where visible light transmittance is 60% or less (%) = (distance of region where visible light transmittance is 60% or less)/(distance from one end to the other end of interlayer film) $\times$ 100

may be determined, and regarded as an area of the part where visible light transmittance is 60% or less in 100% of the total area of the interlayer film.

From the viewpoint of further improving the appearance designability, when the laminated glass (L) is planarly viewed, the area of the part where visible light transmittance is 50% or less in 100% of the total area of the laminated glass (L) is preferably 5% or more, more preferably 10% or more, still more preferably 15% or more, further preferably 20% or more. When the laminated glass (L) is planarly viewed, the area of the part where visible light transmittance is 60% or less in 100% of the total area of the laminated glass (L) may be 30% or more, may be 40% or more, or may be 50% or more. When the laminated glass (L) is planarly viewed, the area of the part where visible light transmittance is 50% or less in 100% of the total area of the laminated glass (L) may be 90% or less, may be 80% or less, may be 70% or less, may be 60% or less, or may be 50% or less.

From the viewpoint of further improving the appearance designability, when the laminated glass (L) is planarly viewed, the area of the part where visible light transmittance is 40% or less in 100% of the total area of the laminated glass (L) is preferably 5% or more, more preferably 10% or more, still more preferably 15% or more, further preferably 20% or more. When the laminated glass (L) is planarly viewed, the area of the part where visible light transmittance is 60% or less in 100% of the total area of the laminated glass (L) may be 30% or more, may be 40% or more, or may be 50% or more. When the laminated glass (L) is planarly viewed, the area of the part where visible light transmittance is 40% or less in 100% of the total area of the laminated glass (L) may be 90% or less, may be 80% or less, may be 70% or less, may be 60% or less, or may be 50% or less. The area of the part where visible light transmittance is 50% or less and the area of the part where visible light transmittance is 40% or less may be determined from the distance of the region where visible light transmittance is 50% or less and the distance of the region where visible light transmittance is 40% or less, and the distance from one end to the other end of the interlayer film, likewise the area of the part where visible light transmittance is 60% or less.

The interlayer film according to the present invention is used for obtaining a laminated glass. Also, the interlayer film according to the present invention is suitably used for obtaining a laminated glass set made up of a plurality of laminated glasses. The laminated glass can be used for partitions, automobiles, railway vehicles, aircraft, ships, buildings, and the like.

The laminated glass includes a first lamination glass member, a second lamination glass member, and an interlayer film part. The interlayer film part is arranged between the first lamination glass member and the second lamination glass member. The interlayer film part is formed by using the interlayer film according to the present invention. By a cut piece obtained by cutting one interlayer film according to the present invention in the lengthwise direction, the interlayer film part in the laminated glass can be formed. By cutting one interlayer film according to the present invention in the lengthwise direction, it is possible to obtain a plurality of cut pieces (for example, cut piece (1), cut piece (2), cut piece (3),...). It is preferred that the interlayer film parts (e.g., interlayer film part (1), interlayer film part (2), interlayer film part (3),...) in the plurality of laminated glasses (e.g., laminated glass (1), laminated glass (2), laminated glass (3),...) be respectively configured by the plurality of cut pieces (e.g., cut piece (1), cut piece (2), cut piece (3),...).

When one interlayer film is cut in the lengthwise direction, the interlayer film may be cut at 1.5 m intervals, or may be cut at intervals other than 1.5 m intervals.

When one interlayer film is cut in the lengthwise direction, the cutting interval is preferably 0.3 m or more, more preferably 0.5 m or more, still more preferably 1.0 m or more, further preferably 1.5 m or more, and is preferably 10 m or less, further preferably 5 m or less, especially preferably 3 m or less. When the interval is the above lower limit or more, it is possible to obtain a laminated glass having a large area. When the interval is the above upper limit or less, it is possible to reduce damage of the laminated glass.

The dimension of the interlayer film part in the laminated glass in the direction corresponding to the lengthwise direction of the interlayer film before cutting is preferably 0.1 m or more, more preferably 0.5 m or more, further preferably 1.5 m or more, especially preferably 2.0 m or more, and is preferably 10 m or less, more preferably 5 m or less, further preferably 3.5 m or less. When the dimension is the above lower limit or more, it is possible to obtain a laminated glass having a large area. When the dimension is the above upper limit or less, it is possible to reduce damage of the laminated glass.

The laminated glass set can be obtained through the following steps. A step of cutting one interlayer film in the lengthwise direction to obtain a plurality of cut pieces. A step of preparing a plurality of first lamination glass members, and a plurality of second lamination glass members for obtaining a plurality of laminated glasses, and arranging each of the cut pieces as an interlayer film part between each of the first lamination glass members and each of the second lamination glass members, to obtain a plurality of laminated glasses.

It is preferred that the method for producing a laminated glass set include the following steps.

In the laminated glass set, the number of laminated glasses is preferably 2 or more, more preferably 3 or more, still more preferably 4 or more, further preferably 5 or more. In this case, even when the number of laminated glasses is large, the appearance designability of the entire laminated glass can be enhanced. In the above laminated glass set, the number of laminated glasses may be 500 or less, may be 300 or less, may be 100 or less, or may be 50 or less.

The interlayer film and the laminated glass set are suitably used for obtaining a laminated glass structure.

The laminated glass structure includes a plurality of laminated glasses, and a connecting member that connects the plurality of laminated glasses. Each of the plurality of laminated glasses includes a first lamination glass member, a second lamination glass member, and an interlayer film part arranged between the first lamination glass member and the second lamination glass member. Respective interlayer film parts in the plurality of laminated glasses are configured by the plurality of cut pieces obtained by cutting one interlayer film in the lengthwise direction.

In the laminated glass structure, it is preferred that the plurality of laminated glasses are arranged in line so that the colored parts in the plurality of laminated glasses align.

In the laminated glass structure, the number of laminated glasses is preferably 2 or more, more preferably 3 or more, still more preferably 4 or more, further preferably 5 or more. In this case, even when the number of laminated glasses is large, the appearance designability of the entire laminated glass can be enhanced. In the above laminated glass structure, the number of laminated glasses may be 500 or less, may be 300 or less, may be 100 or less, or may be 50 or less.

Hereinafter, specific embodiments of the present invention will be described with reference to the drawings. The size and dimension of the interlayer film, the roll body and the laminated glass in the drawings described below are appropriately changed from the actual size and shape for convenience of illustration. In the drawings described below, different points are replaceable. In the drawings described below, the part that may have the same configuration is sometimes denoted by the same reference symbol.

Fig. 1 is a sectional view schematically showing an interlayer film for laminated glass in accordance with a first embodiment of the present invention. Fig. 2 is a sectional view schematically showing a laminated glass prepared with the interlayer film for laminated glass shown in Fig. 1.

Fig. 1 is a sectional view in the widthwise direction of an interlayer film 11. The right and left direction of Fig. 1 is the widthwise direction of the interlayer film 11. The fore-and-aft direction of Fig. 1 is the lengthwise direction of the interlayer film 11.

The interlayer film 11 has one end 11a on one side in the widthwise direction, and the other end 11b on the other side in the widthwise direction.

The interlayer film 11 includes a first resin layer 1 and a second resin layer 2 containing a coloring agent. The second resin layer 2 reaches the one end 11a of the interlayer film 11. The one end 11a part of the interlayer film 11 is configured by the second resin layer 2 and the first resin layer 1. The second resin layer 2 forms a colored part.

On both surface sides of the second resin layer 2, the first resin layer 1 is arranged. The second resin layer 2 is embedded in the first resin layer 1. The first resin layer 1 is a surface layer of the interlayer film 11. The second resin layer 2 is an intermediate layer of the interlayer film 11.

The second resin layer 2 has a gradation part 2X where visible light transmittance increases from the one end 11a side toward the other end 11b side of the interlayer film 11. The second resin layer 2 has a dark color part 2Y on the one end 11a side of the interlayer film 11. The second resin layer 2 reaches the one end 11a of the interlayer film 11 at the dark color part 2Y. The gradation part 2X is a part where the thickness of the second resin layer 2 decreases from the one end 11a side toward the other end 11b side of the interlayer film 11. The dark color part 2Y is a part where the thickness of the second resin layer 2 is uniform. In the interlayer film 11, the colored part is configured by the gradation part 2X and the dark color part 2Y. The gradation part 2X forms a tip of the colored part on the other end 11b side of the interlayer film 11.

A laminated glass 31 shown in Fig. 2 includes a cut piece obtained by cutting the interlayer film 11, as an interlayer film part 11P.

The laminated glass 31 includes a first lamination glass member 21, a second lamination glass member 22, and the interlayer film part 11P. The interlayer film part 11P is arranged between the first lamination glass member 21 and the second lamination glass member 22. The first lamination glass member 21 is arranged on a first surface side of the interlayer film part 11P to be layered thereon. The second lamination glass member 22 is arranged on a second surface side opposite to the first surface of the interlayer film part 11P to be layered thereon.

Fig. 1 shows only one laminated glass 31. By cutting the interlayer film 11, a plurality of cut piece can be obtained. Using the plurality of cut pieces as the interlayer film parts 11P, a plurality of laminated glasses 31, namely a laminated glass set can be obtained.

Fig. 3 is a perspective view schematically showing a roll body prepared by winding the interlayer film for laminated glass shown in Fig. 1.

As shown in Fig. 3, the interlayer film 11 may be wound to be formed into a roll body 51 of the interlayer film 11.

The roll body 51 shown in Fig. 3 includes a winding core 61 and the interlayer film 11. The interlayer film 11 is

wound around an outer periphery of the winding core 61. The interlayer film 11 is wound around the outer periphery of the winding core 61 from the other end side in the lengthwise direction of the interlayer film 11.

Fig. 4 is a perspective view schematically showing a partially developed state of a roll body prepared by winding the interlayer film for laminated glass shown in Fig. 1.

Fig. 4 schematically shows the colored state. The darker the color tone, the lower the visible light transmittance. As shown in Fig. 4, the distance X, the distance Y and the distance Z are measured every 1.5 m in the lengthwise direction of the interlayer film 11.

In the interlayer film 11, the distance X and the distance Y are the same value in one region of every 1.5 m.

Fig. 5 is a sectional view schematically showing an interlayer film for laminated glass in accordance with a second embodiment of the present invention. Fig. 6 is a sectional view schematically showing a laminated glass prepared with the interlayer film for laminated glass shown in Fig. 5.

Fig. 5 is a sectional view in the widthwise direction of an interlayer film 11A. The right and left direction of Fig. 5 is the widthwise direction of the interlayer film 11A. The fore-and-aft direction of Fig. 5 is the lengthwise direction of the interlayer film 11A.

The interlayer film 11A has one end 11Aa on one side in the widthwise direction, and the other end 11Ab on the other side in the widthwise direction.

The interlayer film 11A includes a first resin layer 1A and a second resin layer 2A containing a coloring agent. The second resin layer 2A does not reach the one end 11Aa of the interlayer film 11A. The one end 11Aa part of the interlayer film 11A is configured only by the first resin layer 1A. The second resin layer 2A forms a colored part.

On both surface sides of the second resin layer 2A, the first resin layer 1A is arranged. The second resin layer 2A is embedded in the first resin layer 1A. The first resin layer 1A is a surface layer of the interlayer film 11A. The second resin layer 2A is an intermediate layer of the interlayer film 11A.

The second resin layer 2A has a gradation part 2AX where visible light transmittance increases from the one end 11Aa side toward the other end 11Ab side of the interlayer film 11A. The second resin layer 2A has a dark color part 2AY on the one end 11Aa side of the interlayer film 11A. The gradation part 2AX is a part where the thickness of the second resin layer 2A decreases from the one end 11Aa side toward the other end 11Ab side of the interlayer film 11A. The dark color part 2AY is a part where the thickness of the second resin layer 2A is uniform. In the interlayer film 11A, the colored part is configured by the gradation part 2AX and the dark color part 2AY. The gradation part 2AX forms a tip of the colored part on the other end 11Ab side of the interlayer film 11A.

A laminated glass 31A shown in Fig. 6 includes a cut piece obtained by cutting the interlayer film 11A, as an interlayer film part 11AP.

The laminated glass 31A includes the first lamination glass member 21, the second lamination glass member 22, and the interlayer film part 11AP. The interlayer film part 11AP is arranged between the first lamination glass member 21 and the second lamination glass member 22. The first lamination glass member 21 is arranged on a first surface side of the interlayer film part 11AP to be layered thereon. The second lamination glass member 22 is arranged on a second surface side opposite to the first surface of the interlayer film part 11AP to be layered thereon.

Fig. 6 shows only one laminated glass 31A. By cutting the interlayer film 11A, a plurality of cut piece can be obtained. Using the plurality of cut pieces as the interlayer film parts 11AP, a plurality of laminated glasses 31A, namely a laminated glass set can be obtained.

Fig. 7 is a perspective view schematically showing a roll body prepared by winding the interlayer film for laminated glass shown in Fig. 5.

As shown in Fig. 7, the interlayer film 11A may be wound to be formed into a roll body 51A of the interlayer film 11A.

The roll body 51A shown in Fig. 7 includes the winding core 61 and the interlayer film 11A. The interlayer film 11A is wound around an outer periphery of the winding core 61. The interlayer film 11A is wound around the outer periphery of the winding core 61 from the other end side in the lengthwise direction of the interlayer film 11A.

Fig. 8 is a perspective view schematically showing a partially developed state of a roll body prepared by winding the interlayer film for laminated glass shown in Fig. 5.

Fig. 8 schematically shows the colored state. The darker the color tone, the lower the visible light transmittance. As shown in Fig. 8, the distance X, the distance Y and the distance Z are measured at 1.5 m intervals in the lengthwise direction of the interlayer film 11A.

In the interlayer film 11A, the distance X and the distance Y are different values in one region of every 1.5 m.

Fig. 9 is a sectional view schematically showing an interlayer film for laminated glass in accordance with a third embodiment of the present invention. Fig. 10 is a sectional view schematically showing a laminated glass prepared with the interlayer film for laminated glass shown in Fig. 9.

Fig. 9 is a sectional view in the widthwise direction of an interlayer film 11B. The right and left direction of Fig. 9 is the widthwise direction of the interlayer film 11B. The fore-and-aft direction of Fig. 9 is the lengthwise direction of the interlayer film 11B.

The interlayer film 11B has one end 11Ba on one side in the widthwise direction, and the other end 11Bb on

the other side in the widthwise direction.

The interlayer film 11B includes a first resin layer 1B and a second resin layer 2B containing a coloring agent. The second resin layer 2B does not reach the one end 11Ba of the interlayer film 11B. The one end 11Ba part of the interlayer film 11B is configured only by the first resin layer 1B. The second resin layer 2B forms a colored part.

On both surface sides of the second resin layer 2B, the first resin layer 1B is arranged. The second resin layer 2B is embedded in the first resin layer 1B. The first resin layer 1B is a surface layer of the interlayer film 11B. The second resin layer 2B is an intermediate layer of the interlayer film 11B.

The second resin layer 2B has a first gradation part 2BX where visible light transmittance increases from the one end 11Ba side toward the other end 11Bb side of the interlayer film 11B. The first gradation part 2BX forms a tip of the colored part on the other end 11Bb side of the interlayer film 11B. The second resin layer 2B has a second gradation part 2BZ where visible light transmittance increases from the other end 11Bb side toward the one end 11Ba side of the interlayer film 11B, on the one end 11Ba side of the interlayer film 11B. The first gradation part 2BX is a part where the thickness of the second resin layer 2B decreases from the one end 11Ba side toward the other end 11Bb side of the interlayer film 11B. The second gradation part 2BZ is a part where the thickness of the second resin layer 2B decreases from the other end 11Bb side toward the one end 11Ba side of the interlayer film 11B.

A laminated glass 31B shown in Fig. 10 includes a cut piece obtained by cutting the interlayer film 11B, as an interlayer film part 11BP.

The laminated glass 31B includes the first lamination glass member 21, the second lamination glass member 22, and the interlayer film part 11BP. The interlayer film part 11BP is arranged between the first lamination glass member 21 and the second lamination glass member 22. The first lamination glass member 21 is arranged on a first surface side of the interlayer film part 11BP to be layered thereon. The second lamination glass member 22 is arranged on a second surface side opposite to the first surface of the interlayer film part 11BP to be layered thereon.

Fig. 10 shows only one laminated glass 31B. By cutting the interlayer film 11B, a plurality of cut piece can be obtained. Using the plurality of cut pieces as the interlayer film parts 11BP, a plurality of laminated glasses 31B, namely a laminated glass set can be obtained.

Fig. 11 is a perspective view schematically showing a roll body prepared by winding the interlayer film for laminated glass shown in Fig. 9.

As shown in Fig. 11, the interlayer film 11B may be wound to be formed into a roll body 51B of the interlayer film 11B.

The roll body 51B shown in Fig. 11 includes the winding core 61 and the interlayer film 11B. The interlayer film 11B is wound around an outer periphery of the winding core 61. The interlayer film 11B is wound around the outer periphery of the winding core 61 from the other end side in the lengthwise direction of the interlayer film 11B.

Fig. 12 is a perspective view schematically showing a partially developed state of a roll body prepared by winding the interlayer film for laminated glass shown in Fig. 9.

Fig. 12 schematically shows the colored state. The darker the color tone, the lower the visible light transmittance. As shown in Fig. 12, the distance X, the distance Y and the distance Z are measured every 1.5 m in the lengthwise direction of the interlayer film 11B.

In the interlayer film 11B, the distance X and the distance Y are different values in one region of every 1.5 m in length. It is to be noted that the width of the second gradation part 2BZ is not included in the distance Z because the second gradation part 2BZ is not a part where visible light transmittance increases from the one end 11Ba side toward the other end 11Bb side of the interlayer film 11B (first gradation part 2BX).

Fig. 13 is a sectional view schematically showing an interlayer film for laminated glass in accordance with a fourth embodiment of the present invention. Fig. 14 is a sectional view schematically showing a laminated glass prepared with the interlayer film for laminated glass shown in Fig. 13.

In Fig. 13 and Fig. 14, a coloring agent Q is schematically shown, and abundance of the coloring agent Q is schematically shown. When the coloring agent is particulate, the actual size of the coloring agent is significantly smaller than the size shown in Fig. 13 and Fig. 14. In the sectional views of interlayer films for laminated glass and laminated glasses other than Fig. 13 and Fig. 14, illustration of a coloring agent is omitted.

Fig. 13 is a sectional view in the widthwise direction of an interlayer film 11C. The right and left direction of Fig. 13 is the widthwise direction of the interlayer film 11C. The fore-and-aft direction of Fig. 13 is the lengthwise direction of the interlayer film 11C.

The interlayer film 11C has one end 11Ca on one side in the widthwise direction, and the other end 11Cb on the other side in the widthwise direction.

The interlayer film 11C includes a first resin layer 1C and a second resin layer 2C containing a coloring agent Q. The second resin layer 2C reaches the one end 11Ca of the interlayer film 11C. The one end 11Ca part of the interlayer film 11C is configured by the second resin layer 2C and the first resin layer 1C. The part containing the coloring agent Q in the second resin layer 2C forms a colored part.

The second resin layer 2C has a gradation part 2CX. The second resin layer 2C has a dark color part 2CY on

the one end 11Ca side of the interlayer film 11C. The second resin layer 2C reaches the one end 11Ca of the interlayer film 11C at the dark color part 2CY. The gradation part 2CX is a part where the concentration of the coloring agent Q in the second resin layer 2C decreases from the one end 11Ca side toward the other end 11Cb side of the interlayer film 11C. The dark color part 2CY is a part where the concentration of the coloring agent Q is uniform. In the interlayer film 11C, the colored part is configured by the gradation part 2CX and the dark color part 2CY. The gradation part 2CX forms a tip of the colored part on the other end 11Cb side of the interlayer film 11C.

The one end 11Ca side of the interlayer film 11C is configured by three layers: the first resin layer 1C, the second resin layer 2C and the first resin layer 1C. On both surface sides of the second resin layer 2C, the first resin layer 1C is arranged. On the one end 11Ca side of the interlayer film 11C, the two first resin layers 1C are surface layers of the interlayer film 11C. On the one end 11Ca side of the interlayer film 11C, one second resin layer 2C is an intermediate layer of the interlayer film 11C.

The other end 11Cb side of the interlayer film 11C is configured by three layers: the first resin layer 1C, the second resin layer 2C, and the first resin layer 1C. On the other end 11Cb side of the interlayer film 11C, the two first resin layers 1C are surface layers of the interlayer film 11C. On the other end 11Cb side of the interlayer film 11C, one second resin layer 2C is an intermediate layer of the interlayer film 11C.

The second resin layer 2C which is an intermediate layer, and the first resin layers 1C which are surface layers are continuous.

As with the interlayer film 11C, the gradation part may be formed by the variation in concentration of the coloring agent.

The interlayer film 11C may also be a roll body.

A laminated glass 31C shown in Fig. 14 includes a cut piece obtained by cutting the interlayer film 11C, as an interlayer film part 11CP.

The laminated glass 31C includes the first lamination glass member 21, the second lamination glass member 22, and the interlayer film part 11CP. The interlayer film part 11CP is arranged between the first lamination glass member 21 and the second lamination glass member 22. The first lamination glass member 21 is arranged on a first surface side of the interlayer film part 11CP to be layered thereon. The second lamination glass member 22 is arranged on a second surface side opposite to the first surface of the interlayer film part 11CP to be layered thereon.

Fig. 14 shows only one laminated glass 31C. By cutting the interlayer film 11C, a plurality of cut piece can be obtained. Using the plurality of cut pieces as the interlayer film parts 11CP, a plurality of laminated glasses 31C, namely a laminated glass set can be obtained.

Fig. 15 is a sectional view schematically showing an interlayer film for laminated glass in accordance with a fifth embodiment of the present invention. Fig. 16 is a sectional view schematically showing a laminated glass prepared with the interlayer film for laminated glass shown in Fig. 15.

Fig. 15 is a sectional view in the widthwise direction of an interlayer film 11D. The right and left direction of Fig. 15 is the widthwise direction of the interlayer film 11D. The fore-and-aft direction of Fig. 15 is the lengthwise direction of the interlayer film 11D.

The interlayer film 11D has one end 11Da on one side in the widthwise direction, and the other end 11Db on the other side in the widthwise direction.

The interlayer film 11D includes a first resin layer 1D and a second resin layer 2D containing a coloring agent. The second resin layer 2D reaches the one end 11Da of the interlayer film 11D. The one end 11Da part of the interlayer film 11D is configured by the second resin layer 2D and the first resin layer 1D. The second resin layer 2D forms a colored part.

On either surface side of the second resin layer 2D, the first resin layer 1D is arranged. The second resin layer 2D is not embedded in the first resin layer 1D. The first resin layer 1D is a surface layer of the interlayer film 11D. The second resin layer 2D is a surface layer of the interlayer film 11D.

The second resin layer 2D has a gradation part 2DX where visible light transmittance increases from the one end 11Da side toward the other end 11Db side of the interlayer film 11D. The second resin layer 2D has a dark color part 2DY on the one end 11Da side of the interlayer film 11D. In the interlayer film 11D, the colored part is configured by the gradation part 2DX and the dark color part 2DY. The gradation part 2DX forms a tip of the colored part on the other end 11Db side of the interlayer film 11D.

The second resin layer 2D reaches the one end 11Da of the interlayer film 11D at the dark color part 2DY. The gradation part 2DX is a part where the thickness of the second resin layer 2D decreases from the one end 11Da side toward the other end 11Db side of the interlayer film 11D. The dark color part 2DY is a part where the thickness of the second resin layer 2D is uniform.

As with the interlayer film 11D, the second resin layer 2D need not be embedded in the first resin layer 1D, and the second resin layer may be a surface layer.

The interlayer film 11D may also be a roll body.

A laminated glass 31D shown in Fig. 16 includes a cut piece obtained by cutting the interlayer film 11D, as an

interlayer film part 11DP.

The laminated glass 31D includes the first lamination glass member 21, the second lamination glass member 22, and the interlayer film part 11DP. The interlayer film part 11DP is arranged between the first lamination glass member 21 and the second lamination glass member 22. The first lamination glass member 21 is arranged on a first surface side of the interlayer film part 11DP to be layered thereon. The second lamination glass member 22 is arranged on a second surface side opposite to the first surface of the interlayer film part 11DP to be layered thereon.

Fig. 16 shows only one laminated glass 31D. By cutting the interlayer film 11D, a plurality of cut piece can be obtained. Using the plurality of cut pieces as the interlayer film parts 11DP, a plurality of laminated glasses 31D, namely a laminated glass set can be obtained.

Fig. 17 is a sectional view schematically showing an interlayer film for laminated glass in accordance with a sixth embodiment of the present invention. Fig. 18 is a sectional view schematically showing a laminated glass prepared with the interlayer film for laminated glass shown in Fig. 17.

Fig. 17 is a sectional view in the widthwise direction of an interlayer film 11E. The right and left direction of Fig. 17 is the widthwise direction of the interlayer film 11E. The fore-and-aft direction of Fig. 17 is the lengthwise direction of the interlayer film 11E.

The interlayer film 11E has one end 11Ea on one side in the widthwise direction, and the other end 11Eb on the other side in the widthwise direction.

The interlayer film 11E includes a first resin layer 1E, a second resin layer 2E containing a coloring agent, a third resin layer 3E, and a fourth resin layer 4E. The second resin layer 2E reaches the one end 11Ea of the interlayer film 11E. The one end 11Ea part of the interlayer film 11E is configured by the second resin layer 2E, the first resin layer 1E, the third resin layer 3E and the fourth resin layer 4E. The second resin layer 2E forms a colored part.

On both surface sides of the second resin layer 2E, the first resin layer 1E is arranged. The second resin layer 2E is embedded in the first resin layer 1E. The first resin layer 1E is a surface layer of the interlayer film 11E. The second resin layer 2E is an intermediate layer of the interlayer film 11E.

The third resin layer 3E is arranged on a surface side opposite to the second resin layer 2E of the first resin layer 1E to be layered thereon. The fourth resin layer 4E is arranged on a surface side opposite to the first resin layer 1E of the third resin layer 3E to be layered thereon. The third resin layer 3E is an intermediate layer of the interlayer film 11E. The third resin layer 3E is a sound insulating layer. The fourth resin layer 4E is a surface layer of the interlayer film 11E.

The second resin layer 2E has a gradation part 2EX where visible light transmittance increases from the one end 11Ea side toward the other end 11Eb side of the interlayer film 11E. The second resin layer 2E has a dark color part 2EY on the one end 11Ea side of the interlayer film 11E. The second resin layer 2E reaches the one end 11Ea of the interlayer film 11E at the dark color part 2EY. The gradation part 2EX is a part where the thickness of the second resin layer 2E decreases from the one end 11Ea side toward the other end 11Eb side of the interlayer film 11E. The dark color part 2EY is a part where the thickness of the second resin layer 2E is uniform. In the interlayer film 11E, the colored part is configured by the gradation part 2EX and the dark color part 2EY. The gradation part 2EX forms a tip of the colored part on the other end 11Eb side of the interlayer film 11E.

The interlayer film 11E may also be a roll body.

A laminated glass 31E shown in Fig. 18 includes a cut piece obtained by cutting the interlayer film 11E, as an interlayer film part 11EP.

The laminated glass 31E includes the first lamination glass member 21, the second lamination glass member 22, and the interlayer film part 11EP. The interlayer film part 11EP is arranged between the first lamination glass member 21 and the second lamination glass member 22. The first lamination glass member 21 is arranged on a first surface side of the interlayer film part 11EP to be layered thereon. The second lamination glass member 22 is arranged on a second surface side opposite to the first surface of the interlayer film part 11EP to be layered thereon.

Fig. 18 shows only one laminated glass 31E. By cutting the interlayer film 11E, a plurality of cut piece can be obtained. Using the plurality of cut pieces as the interlayer film parts 11EP, a plurality of laminated glasses 31E, namely a laminated glass set can be obtained.

Fig. 19 is a sectional view schematically showing an interlayer film for laminated glass in accordance with a seventh embodiment of the present invention. Fig. 20 is a sectional view schematically showing a laminated glass prepared with the interlayer film for laminated glass shown in Fig. 19.

Fig. 19 is a sectional view in the widthwise direction of an interlayer film 11F. The right and left direction of Fig. 19 is the widthwise direction of the interlayer film 11F. The fore-and-aft direction of Fig. 19 is the lengthwise direction of the interlayer film 11F.

The interlayer film 11F has one end 11Fa on one side in the widthwise direction, and the other end 11Fb on the other side in the widthwise direction.

The interlayer film 11F includes a first resin layer 1F, a second resin layer 2F containing a coloring agent, a functional film 5F, and a third resin layer 3F. The second resin layer 2F reaches the one end 11Fa of the interlayer film 11F. The one end 11Fa part of the interlayer film 11F is configured by the second resin layer 2F, the first resin layer 1F,

the functional film 5F and the third resin layer 3F. The second resin layer 2F forms a colored part.

On both surface sides of the second resin layer 2F, the first resin layer 1F is arranged. The second resin layer 2F is embedded in the first resin layer 1F. The first resin layer 1F is a surface layer of the interlayer film 11F. The second resin layer 2F is an intermediate layer of the interlayer film 11F.

The functional film 5F is arranged on a surface side opposite to the second resin layer 2F of the first resin layer 1F to be layered thereon. The third resin layer 3F is arranged on a surface side opposite to the first resin layer 1F of the functional film 5F to be layered thereon. The functional film 5F is an intermediate layer of the interlayer film 11F. The third resin layer 3F is a surface layer of the interlayer film 11F. The functional film 5F is an infrared ray reflective film.

The second resin layer 2F has a gradation part 2FX where visible light transmittance increases from the one end 11Fa side toward the other end 11Fb side of the interlayer film 11F. The second resin layer 2F has a dark color part 2FY on the one end 11Fa side of the interlayer film 11F. The second resin layer 2F reaches the one end 11Fa of the interlayer film 11F at the dark color part 2FY. The gradation part 2FX is a part where the thickness of the second resin layer 2F decreases from the one end 11Fa side toward the other end 11Fb side of the interlayer film 11F. The dark color part 2FY is a part where the thickness of the second resin layer 2F is uniform. In the interlayer film 11F, the colored part is configured by the gradation part 2FX and the dark color part 2FY. The gradation part 2FX forms a tip of the colored part on the other end 11Fb side of the interlayer film 11F.

The interlayer film 11F may also be a roll body.

A laminated glass 31F shown in Fig. 20 includes a cut piece obtained by cutting the interlayer film 11F, as an interlayer film part 11FP.

The laminated glass 31F includes the first lamination glass member 21, the second lamination glass member 22, and the interlayer film part 11FP. The interlayer film part 11FP is arranged between the first lamination glass member 21 and the second lamination glass member 22. The first lamination glass member 21 is arranged on a first surface side of the interlayer film part 11FP to be layered thereon. The second lamination glass member 22 is arranged on a second surface side opposite to the first surface of the interlayer film part 11FP to be layered thereon.

Fig. 20 shows only one laminated glass 31F. By cutting the interlayer film 11F, a plurality of cut piece can be obtained. Using the plurality of cut pieces as the interlayer film parts 11FP, a plurality of laminated glasses 31F, namely a laminated glass set can be obtained.

Fig. 21 is a sectional view schematically showing an interlayer film for laminated glass in accordance with an eighth embodiment of the present invention. Fig. 22 is a sectional view schematically showing a laminated glass prepared with the interlayer film for laminated glass shown in Fig. 21.

Fig. 21 is a sectional view in the widthwise direction of an interlayer film 11G. The right and left direction of Fig. 21 is the widthwise direction of the interlayer film 11G. The fore-and-aft direction of Fig. 21 is the lengthwise direction of the interlayer film 11G.

The interlayer film 11G has one end 11Ga on one side in the widthwise direction, and the other end 11Gb on the other side in the widthwise direction.

The interlayer film 11G includes a first resin layer 1G, a second resin layer 2G containing a coloring agent, a functional film 5G, a third resin layer 3G, and a fourth resin layer 4G containing a coloring agent. The second resin layer 2G and the fourth resin layer 4G reach one end 11Ga of the interlayer film 11G. The one end 11Ga part of the interlayer film 11G is configured by the second resin layer 2G, the first resin layer 1G, the functional film 5G, the fourth resin layer 4G and the third resin layer 3G. The second resin layer 2G forms a colored part. The fourth resin layer 4G forms a colored part.

On both surface sides of the second resin layer 2G, the first resin layer 1G is arranged. The second resin layer 2G is embedded in the first resin layer 1G. The first resin layer 1G is a surface layer of the interlayer film 11G. The second resin layer 2G is an intermediate layer of the interlayer film 11G. On both surface sides of the fourth resin layer 4G, the third resin layer 3G is arranged. The fourth resin layer 4G is embedded in the third resin layer 3G. The third resin layer 3G is a surface layer of the interlayer film 11G. The fourth resin layer 4G is an intermediate layer of the interlayer film 11G.

The functional film 5G is arranged on a surface side opposite to the second resin layer 2G of the first resin layer 1G to be layered thereon. The functional film 5G is arranged on a surface side opposite to the fourth resin layer 4G of the third resin layer 3G to be layered thereon. The functional film 5G is an infrared ray reflective film.

The second resin layer 2G has a gradation part 2GX where visible light transmittance increases from the one end 11Ga side toward the other end 11Gb side of the interlayer film 11G. The second resin layer 2G has a dark color part 2GY on the one end 11Ga side of the interlayer film 11G. The second resin layer 2G reaches the one end 11Ga of the interlayer film 11G at the dark color part 2GY. The gradation part 2GX is a part where the thickness of the second resin layer 2G decreases from the one end 11Ga side toward the other end 11Gb side of the interlayer film 11G. The dark color part 2GY is a part where the thickness of the second resin layer 2G is uniform.

The fourth resin layer 4G has a gradation part 4GX where visible light transmittance increases from the one end 11Ga side toward the other end 11Gb side of the interlayer film 11G. The fourth resin layer 4G has a dark color part

4GY on the one end 11Ga side of the interlayer film 11G. The fourth resin layer 4G reaches the one end 11Ga of the interlayer film 11G at the dark color part 4GY. The gradation part 4GX is a part where the thickness of the fourth resin layer 4G decreases from the one end 11Ga side toward the other end 11Gb side of the interlayer film 11G. The dark color part 4GY is a part where the thickness of the fourth resin layer 4G is uniform.

In the interlayer film 11G, the colored part is configured by the gradation part 2GX and the dark color part 2GY. The gradation part 2GX forms a tip of the colored part on the other end 11Gb side of the interlayer film 11G. In the interlayer film 11G, the colored part is configured by the gradation part 4GX and the dark color part 4GY. The gradation part 4GX forms a tip of the colored part on the other end 11Gb side of the interlayer film 11G.

The interlayer film 11G may also be a roll body.

A laminated glass 31G shown in Fig. 22 includes a cut piece obtained by cutting the interlayer film 11G, as an interlayer film part 11GP.

The laminated glass 31G includes the first lamination glass member 21, the second lamination glass member 22, and the interlayer film part 11GP. The interlayer film part 11GP is arranged between the first lamination glass member 21 and the second lamination glass member 22. The first lamination glass member 21 is arranged on a first surface side of the interlayer film part 11GP to be layered thereon. The second lamination glass member 22 is arranged on a second surface side opposite to the first surface of the interlayer film part 11GP to be layered thereon.

Fig. 22 shows only one laminated glass 31G. By cutting the interlayer film 11G, a plurality of cut piece can be obtained. Using the plurality of cut pieces as the interlayer film parts 11GP, a plurality of laminated glasses 31G, namely a laminated glass set can be obtained.

Fig. 23 is a front view showing a laminated glass set including a plurality of laminated glasses shown in Fig. 2.

Fig. 23 schematically shows the colored state. The darker the color tone, the lower the visible light transmittance. In a laminated glass set 71 shown in Fig. 23, the laminated glass 31 is used among the laminated glasses 31, 31A, 31B, 31C, 31D, 31E, 31F, 31G as described above. The laminated glass set 71 includes a plurality of laminated glasses 31. In Fig. 23, a plurality of laminated glasses 31 are arranged. In the laminated glass set 71, the plurality of laminated glasses 31 are handled as a set article. The interlayer film part 11P (the symbol is not shown) constituting the plurality of laminated glasses 31 in the laminated glass set 71 is obtained from one interlayer film 11.

Fig. 24 is a front view showing the first example of a laminated glass structure using the laminated glass set shown in Fig. 23.

Fig. 24 schematically shows the colored state. The darker the color tone, the lower the visible light transmittance. In a laminated glass structure 81 shown in Fig. 24, the laminated glass 31 is used among the laminated glasses 31, 31A, 31B, 31C, 31D, 31E, 31F, 31G as described above. In the laminated glass structure 81, the laminated glass set 71 is used.

The laminated glass structure 81 includes the laminated glass set 71 and a connecting member 91. In the present embodiment, the connecting member 91 connects the laminated glasses 31 arranged in line. The connecting member 91 is a connecting member, and is a hinge. The hinge connects two laminated glasses 31. Two laminated glasses 31 are connected by one hinge. In the laminated glass structure 81 can be bent forward or backward in Fig. 24. The laminated glass structure 81 can be folded at the connecting member 91 part.

Fig. 25 is a front view showing the second example of a laminated glass structure using the laminated glass set shown in Fig. 23.

Fig. 25 schematically shows the colored state. In a laminated glass structure 82 shown in Fig. 25, the laminated glass 31 is used among the laminated glasses 31, 31A, 31B, 31C, 31D, 31E, 31F, 31G as described above. In the laminated glass structure 82, the laminated glass set 71 is used.

The laminated glass structure 82 includes the laminated glass set 71 and a connecting member 92. In the present embodiment, the connecting member 92 connects the laminated glasses 31 arranged in line. The connecting member 92 is a connecting member, and is a frame member. The connecting member 92 surrounds the outer periphery of the laminated glass 31. The laminated glass 31 is attached to an opening of the connecting member 92.

Fig. 26 is a front view showing a laminated glass structure prepared with a conventional interlayer film.

Fig. 26 schematically shows the colored state. In a laminated glass structure 101, a conventional interlayer film 102 is used.

As shown in Fig. 26, the laminated glass structure prepared with a conventional interlayer film has a problem that the variation in the position of the colored part, or the position of a tip of the colored part (tip of the gradation part) (broken line part in Fig. 26) is large.

In contrast to this, the laminated glass structures 81 and 82 can reduce the variation in the position of the colored part and the position of a tip of the colored part (tip of the gradation part) (broken line part in Figs. 24 and 25) because the aforementioned interlayer film 11 is used.

Hereinafter, other details of members constituting the interlayer film and the laminated glass set are described.

(First and second lamination glass members)

Examples of the first and second lamination glass members include a glass plate, a PET (polyethylene terephthalate) film, and the like. As the laminated glass, laminated glass in which an interlayer film (interlayer film part) is sandwiched between a glass plate and a PET film or the like, as well as laminated glass in which an interlayer film (interlayer film part) is sandwiched between two glass plates, is included. The laminated glass is a laminate provided with a glass plate, and it is preferred that at least one glass plate be used. It is preferred that each of the first and second lamination glass members be a glass plate or a PET (polyethylene terephthalate) film and the laminated glass include at least one glass plate as the first and second lamination glass members. It is especially preferred that both of the first and second lamination glass members be glass plates.

Examples of the glass plate include a sheet of inorganic glass and a sheet of organic glass. Examples of the inorganic glass include float plate glass, heat ray-absorbing plate glass, heat ray-reflecting plate glass, polished plate glass, figured plate glass, net plate glass, wired plate glass, green glass, and the like. The organic glass is synthetic resin glass substituted for inorganic glass. Examples of the organic glass include a polycarbonate plate, a poly(meth)acrylic resin plate, and the like. Examples of the poly(meth)acrylic resin plate include a polymethyl (meth)acrylate plate, and the like.

Although respective thicknesses of the first lamination glass member and the second lamination glass member are not particularly limited, the thickness is preferably 1 mm or more and preferably 5 mm or less. When the lamination glass member is a glass plate, the thickness of the glass plate is preferably 1 mm or more and is preferably 5 mm or less. When the lamination glass member is a PET film, the thickness of the PET film is preferably 0.03 mm or more and is preferably 0.5 mm or less.

The thickness of the first and second lamination glass members means an average thickness.

(Interlayer film)

The thickness of the interlayer film is not particularly limited. From the viewpoint of the practical aspect and the viewpoint of sufficiently enhancing the penetration resistance and the flexural rigidity of laminated glass, the thickness of the interlayer film is preferably 0.1 mm or more, more preferably 0.25 mm or more, and is preferably 3 mm or less, more preferably 1.5 mm or less. When the thickness of the interlayer film is the above lower limit or more, the penetration resistance and the flexural rigidity of laminated glass are further enhanced. When the thickness of the interlayer film is the above upper limit or less, the transparency of the interlayer film is further improved.

The thickness of the interlayer film means an average thickness.

Resin:

It is preferred that the interlayer film contain a resin. It is preferred that the first resin layer contain a resin. It is preferred that the second resin layer contain a resin. It is preferred that the third resin layer contain a resin. It is preferred that the fourth resin layer contain a resin. Examples of the resin include thermosetting resins and thermoplastic resins, and the like. One kind of the resin may be used alone, and two or more kinds thereof may be used in combination.

Examples of the thermoplastic resin include a polyvinyl acetal resin, a polyester resin, an ethylene-vinyl acetate copolymer resin, an ethylene-acrylic acid copolymer resin, a polyurethane resin, a polyvinyl alcohol resin, and the like. Thermoplastic resins other than these may be used.

Plasticizer:

It is preferred that the interlayer film contain a plasticizer. It is preferred that the first resin layer contain a plasticizer. It is preferred that the second resin layer contain a plasticizer. It is preferred that the third resin layer contain a plasticizer. It is preferred that the fourth resin layer contain a plasticizer. When the thermoplastic resin contained in the interlayer film is a polyvinyl acetal resin, it is especially preferred that the interlayer film (the respective layers) contain a plasticizer. One kind of the plasticizer may be used alone and two or more kinds thereof may be used in combination.

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. Organic ester plasticizers are preferred. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decylic acid, benzoic acid and the

like.

Examples of the polybasic organic acid ester include an ester compound of a polybasic organic acid and an alcohol having a linear or branched structure of 4 to 8 carbon atoms. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, diethylene glycol dibenzoate, dipropylene glycol dibenzoate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. Organic ester plasticizers other than these may be used. Other adipic acid esters other than the above-described adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

[Chemical 1]

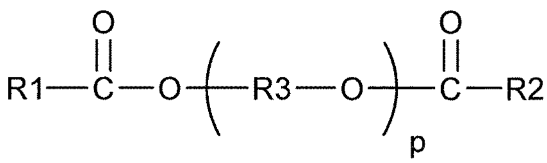

···(1)

In the foregoing formula (1), R1 and R2 each represent an organic group with 5 to 10 carbon atoms, R3 represents an ethylene group, an isopropylene group, or an n-propylene group, and p represents an integer of 3 to 10. It is preferred that R1 and R2 in the foregoing formula (1) each be an organic group with 6 to 10 carbon atoms.

It is preferred that the plasticizer include triethylene glycol di-2-ethylhexanoate (3GO), triethylene glycol di-2-ethylbutyrate (3GH) or triethylene glycol di-2-ethylpropanoate. It is more preferred that the plasticizer include triethylene glycol di-2-ethylhexanoate (3GO) or triethylene glycol di-2-ethylbutyrate (3GH), and it is further preferred that the plasticizer include triethylene glycol di-2-ethylhexanoate.

In the interlayer film, a content of the plasticizer relative to 100 parts by mass of the resin (when the resin is thermoplastic resin, 100 parts by mass of the thermoplastic resin; when the resin is polyvinyl acetal resin, 100 parts by mass of the polyvinyl acetal resin) is referred to as content (0). The content (0) is preferably 25 parts by mass or more, more preferably 30 parts by mass or more, and is preferably 100 parts by mass or less, more preferably 60 parts by mass or less, further preferably 50 parts by mass or less. When the content (0) is the above lower limit or more, the penetration resistance of laminated glass is further enhanced. When the content (0) is the above upper limit or less, the transparency of the interlayer film is further enhanced.

(Coloring agent)

It is preferred that the interlayer film contain a coloring agent. It is preferred that the second resin layer contain a coloring agent. Each of the first resin layer, the third resin layer and the fourth resin layer may contain a coloring agent. It is preferred that at least one of the first resin layer and the second resin layer contain a coloring agent. Both the first resin layer and the second resin layer may contain a coloring agent. Examples of the coloring agent include inorganic particles, a dye, a pigment and the like.

Examples of the inorganic particles include carbon black particles, carbon nanotube particles, graphene particles, iron oxide particles, zinc oxide particles, calcium carbonate particles, alumina particles, kaolin clay particles, calcium silicate particles, magnesium oxide particles, magnesium hydroxide particles, aluminum hydroxide particles, magnesium carbonate particles, talc particles, feldspar powder particles, mica particles, barite particles, barium carbonate particles, titanium oxide particles, silica particles, and glass beads, and the like. One kind of the inorganic particles may be used alone, and two or more kinds thereof may be used in combination.

It is preferred that the inorganic particles include carbon black particles, carbon nanotube particles, graphene particles, calcium carbonate particles, titanium oxide particles or silica particles, and it is more preferred that the inorganic particles include calcium carbonate particles. By using these preferred inorganic particles, unevenness in appearance

is suppressed when the light penetrates, and laminated glass having still further excellent appearance designability is obtained.

The average particle diameter of the inorganic particles is preferably 0.01 um or more, more preferably 0.5 um or more, and is preferably 100 um or less, more preferably 50 um or less, further preferably 10 um or less. The average particle diameter refers to the weight average particle diameter. The average particle diameter can be measured by a dynamic light scattering method with a light scattering measuring device and a laser as a light source. Examples of the light scattering measuring device include "DLS-6000AL" available from OTSUKA ELECTRONICS Co., LTD., and the like.

Examples of the dye include a pyrene-based dye, an aminoketone-based dye, an anthraquinone-based dye, and an azo-based dye, and the like. One kind of the dye may be used alone, and two or more kinds thereof may be used in combination.

Examples of the pyrene-based dye include Solvent Green 5 (CAS79869-59-3) and Solvent Green 7 (CAS6358-69-6), and the like.

Examples of the aminoketone-based dye include Solvent Yellow 98 (CAS12671-74-8), Solvent Yellow 85 (CAS12271-01-1) and Solvent Red 179 (CAS8910-94-5), and Solvent Red 135 (CAS71902-17-5), and the like.

Examples of the anthraquinone-based dye include Solvent Yellow 163 (CAS13676091-0), Solvent Red 207 (CAS15958-69-6), Disperse Red 92 (CAS12236-11-2), Solvent Violet 13 (CAS81-48-1), Disperse Violet 31 (CAS6408-72-6), Solvent Blue 97 (CAS61969-44-6), Solvent Blue 45 (CAS37229-23-5), Solvent Blue 104 (CAS116-75-6) and Disperse Blue 214 (CAS104491-84-1), and the like.

Examples of the azo-based dye include Solvent Yellow30 (CAS3321-10-4), Solvent Red 164 (CAS70956-30-8), and Disperse Blue 146 (CAS88650-91-3), and the like.

The pigment may be an organic pigment and may be an inorganic pigment. The organic pigment may be an organic pigment having a metal atom, and may be an organic pigment not having a metal atom. One kind of the pigment may be used alone, and two or more kinds thereof may be used in combination.

Examples of the organic pigment include a phthalocyanine compound, a quinacridone compound, an azo compound, a pentaphene compound, a perylene compound, an indole compound and a dioxazine compound, and the like.

When the first resin layer contains a coloring agent, it is more preferred that the first resin layer contain carbon black particles, carbon nanotube particles, graphene particles, calcium carbonate particles, titanium oxide particles, silica particles or a phthalocyanine compound, and it is especially preferred that the first resin layer contain calcium carbonate particles. It is more preferred that the second resin layer contain carbon black particles, carbon nanotube particles, graphene particles, calcium carbonate particles, titanium oxide particles, silica particles or a phthalocyanine compound, and it is especially preferred that the second resin layer contain calcium carbonate particles. By using these ingredients, unevenness in appearance is suppressed when the light penetrates, and laminated glass having still further excellent appearance designability is obtained.

Other ingredients:

Each of the interlayer film, the light color part, and the colored part may contain additives such as heat shielding particles, a light shielding agent, a coloring agent, a UV absorber, an oxidation inhibitor, an adhesive force adjusting agent, a light stabilizer, a flame retarder, an antistatic agent, a moisture-proof agent, a heat rays reflector and a heat rays absorber, and the like, as necessary. One kind of the additives may be used alone and two or more kinds thereof may be used in combination.

The first resin layer may contain the heat shielding particles. The second resin layer may contain the heat shielding particles. The third resin layer may contain the heat shielding particles. The fourth resin layer may contain the heat shielding particles. The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. Accordingly, infrared rays are generally called heat rays. By the use of the heat shielding particles, infrared rays (heat rays) can be effectively cut off. In this connection, the heat shielding particle means a particle capable of absorbing infrared rays. Since the interlayer film contains heat shielding particles, it is possible to improve the heat shielding property and the appearance designability of the laminated glass.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles and silicon-doped zinc oxide particles, lanthanum hexaboride ($LaB_6$) particles, and the like. Heat shielding particles other than these may be used. One kind of the heat shielding particles may be used alone, and two or more kinds thereof may be used in combination.

The average particle diameter of the heat shielding particles is preferably 10 nm or more, more preferably 20 nm or more, and is preferably 100 nm or less, more preferably 80 nm or less, further preferably 50 nm or less. When the average particle diameter is the above lower limit or more, it is possible to sufficiently enhance the heat ray shielding property. When the average particle diameter is the above upper limit or less, the dispersibility of heat shielding particles is enhanced.
The "average particle diameter" refers to the volume average particle diameter. The average particle diameter can be measured using a particle size distribution measuring apparatus ("UPA-EX150" available from NIKKISO CO., LTD.), or the like.

Combination with other functional film:

The interlayer film according to the present invention may include other functional film for the purpose of realizing other function. Examples of the functional film include an infrared reflective film, a colored film, and a film with design printing, and the like. For example, in order to enhance the heat shielding property, the interlayer film may include an infrared reflective film. For example, in order to further improve the designability, or combine with other pattern, the interlayer film may include a colored film, or may include a film with design printing.
In the interlayer film including a functional film, for example, it is preferred that the first resin layer and the second resin layer be arranged on a first surface side of the functional film, the third resin layer be arranged on a second surface side opposite to the first surface of the functional film, and the second resin layer be arranged between the first resin layers. In the interlayer film including a functional film, the layer arranged on the first surface side of the functional film may be a single layer or may be multi-layered. In the interlayer film including a functional film, the layer arranged on the second surface side of the functional film may be a single layer or may be multi-layered. The interlayer film including a functional film may include the first resin layer, the second resin layer and the third resin layer, or may include the first resin layer, the second resin layer, the third resin layer and the fourth resin layer on the first surface side of the functional film. Also, the interlayer film including a functional film may include the third resin layer and the fourth resin layer on the second surface side of the functional film.
Examples of the infrared reflective film include a resin film with metal foil, a multilayer laminate film in which a metal layer and a dielectric layer are formed on a resin film, a multilayer resin film, and a liquid crystal film, and the like. These films have the property of reflecting infrared rays.
The resin film with metal foil includes a resin film, and a metal foil layered on the outer surface of the resin film. Examples of the material of the resin film include a polyethylene terephthalate resin, a polyethylene naphthalate resin, a polyvinyl acetal resin, an ethylene-vinyl acetate copolymer resin, an ethylene-acrylic acid copolymer resin, a polyurethane resin, a polyvinyl alcohol resin, a polyolefin resin, a polyvinyl chloride resin, and a polyimide resin. Examples of the material of the metal foil include aluminum, copper, silver, gold, palladium, and alloys containing these metals.
The multilayer laminate film in which a metal layer and a dielectric layer are formed on a resin film is a multilayer laminate film in which any number of layers of the metal layer and the dielectric layer are alternately layered on the resin film. In the multilayer laminate film in which a metal layer and a dielectric layer are formed on a resin layer, it is preferred that all of the metal layers and the dielectric layers be layered alternately, however, there may be a structural part in which a metal layer and a dielectric layer are not layered alternately as exemplified by metal layer/dielectric layer/metal layer/dielectric layer/metal layer/metal layer/dielectric layer/metal layer.
Examples of the material of the resin film in the multilayer laminate film include polyethylene, polypropylene, polylactic acid, poly(4-methylpentene-1), polyvinylidene fluoride, cyclic polyolefin, polymethyl methacrylate, polyvinyl chloride, polyvinyl alcohol, polyamide such as nylon 6, 11, 12, 66 and the like, polystyrene, polycarbonate, polyethylene terephthalate, polyethylene naphthalate, polyester, polyphenylene sulfide, and polyether imide. As the material of the metal layer in the multilayer laminate film, those exemplified as the material of the metal foil in the resin film with metal foil can be exemplified. A coating layer of metal or a mixed oxide of metal can be given to the both faces or either face of the metal layer. Examples of the material of the coating layer include ZnO, $Al_2O_3$, $Ga_2O_3$, $InO_3$, MgO, Ti, NiCr and Cu. Also, examples of the dielectric layer in the multilayer laminate film include indium oxide.
The multilayer resin film is a laminate film in which a plurality of resin films are layered. As the material of the multilayer resin film, those exemplified as the material of the resin film in the multilayer laminate film can be exemplified. The number of layered resin films in the multilayer resin film is 2 or more, and may be 3 or more, and may be 5 or more. The number of layered resin films in the multilayer resin film may be 1000 or less, and may be 100 or less, and may be 50 or less.
The multilayer resin film may be a multilayer resin film in which any number of layers of two or more kinds of thermoplastic resin films having different optical properties (refractive index) are layered alternately or randomly. Such a multilayer resin film is so configured that a desired infrared reflecting property is obtained.
As the liquid crystal film, a film in which any number of layers of cholesteric liquid crystal layers that reflect the light of any wavelength are layered can be recited. Such a liquid crystal film is so configured that desired infrared reflecting

property is obtained.

The infrared reflective film may contain infrared reflective particles. The infrared reflective particles are particles having the infrared reflecting property, and for example, tabular particles having a thickness of 1 nm or more and 1000 um or less can be recited. For example, in the resin film in which silver nano tabular particles are dispersed, an infrared reflective film having infrared reflecting property is obtained by adjusting the thickness, the surface area and the arrangement state of the silver nano tabular particles.

Hereinafter, the present invention will be described in more detail with reference to examples. The present invention is not limited only to the following examples.

The following materials were prepared.

(Resin)

Polyvinyl butyral resin 1 (polymerization degree: 1700, amount of acetal group: 69 mol%, amount of hydroxyl group: 30 mol%, amount of acetyl group: 1 mol%) (hereinafter, also referred to as PVB1)

Polyvinyl butyral resin 2 (polymerization degree: 1700, amount of acetal group: 70 mol%, amount of hydroxyl group: 18 mol%, amount of acetyl group: 12 mol%) (hereinafter, also referred to as PVB2)

Polyvinyl butyral resin 3 (polymerization degree: 2300, amount of acetal group: 70 mol%, amount of hydroxyl group: 18 mol%, amount of acetyl group: 12 mol%) (hereinafter, also referred to as PVB3)

Polyvinyl butyral resin 4 (polymerization degree: 3300, amount of acetal group: 70 mol%, amount of hydroxyl group: 18 mol%, amount of acetyl group: 12 mol%) (hereinafter, also referred to as PVB4)

Polyvinyl butyral resin 5 (polymerization degree: 1700, amount of acetal group: 74 mol%, amount of hydroxyl group: 18 mol%, amount of acetyl group: 8 mol%) (hereinafter, also referred to as PVB5)

(Plasticizer)

Triethylene glycol-2-ethylhexanoate (hereinafter, sometimes described as 3GO)

(Coloring agent)

Calcium carbonate: calcium carbonate particles ("SUPER 4S" available from MARUO CALCIUM CO., LTD.
Blue pigment: copper phthalocyanine pigment (Pigment Blue 15)
Black pigment: carbon black (Pigment Black 7)

(Heat shielding particles)

ITO: tin-doped indium oxide particles (average particle diameter: 50 nm)
CWO: cesium-doped tungsten oxide particles (average particle diameter: 50 nm)

(Functional film: infrared reflective film)

3M90S (multilayer resin film, "Multilayer Nano 90S" available from Sumitomo 3M Limited)
XIR (resin film with metal foil, "XIR-75" available from Southwall Technologies)

(Example 1)

In Example 1, the interlayer film as shown in Fig. 1 was prepared.

Preparation of resin composition for forming first resin layer:

As shown in the following Table 1, 100 parts by mass of PVB1 and 40 parts by mass of 3GO were mixed, and sufficiently kneaded with a mixing roll, to obtain a resin composition A1 for forming a first resin layer.

Preparation of resin composition for forming second resin layer:

As shown in the following Table 1, 100 parts by mass of PVB1, 40 parts by mass of 3GO, and calcium carbonate that was mixed so that the concentration in the obtained composition was 6.13% by mass were mixed, and sufficiently kneaded with a mixing roll, to obtain a resin composition B1 for forming a second resin layer.

Preparation of interlayer film:

The resin composition A1 for forming a first resin layer and the resin composition B1 for forming a second resin layer were co-extruded with a co-extruder, and then wound to obtain a roll body of the interlayer film having a length of 40 m. At this time, the revolving speed of the gear pump was PID controlled on the basis of the discharge pressure and the inlet pressure measured every 0.1 seconds, and parameters of the control function were optimized, and thus variation in the inlet pressure in a long period of 180 seconds was suppressed. Specifically, as shown in the following Table 2, difference between the maximum value and the minimum value of the inlet pressure (inlet pressure variation) in 180 seconds was set at $30 \times 10^5$ Pa in the gear pump 1 for extruding the resin composition A1 for forming a first resin layer. Also, as shown in the following Table 2, difference between the maximum value and the minimum value of the inlet pressure (inlet pressure variation) in 180 seconds was set at $30 \times 10^5$ Pa in the gear pump 1 for extruding the resin composition B1 for forming a second resin layer. The linear velocity at the time of extrusion was 10 m/min. In Example 1, the width of the interlayer film was 1800 mm.

Preparation of laminated glass set:

1) Taking the position of one end in the lengthwise direction of the interlayer film as a starting position, 20 divisional positions (A) were set at 1.5 m intervals from one end toward the other end in the lengthwise direction of the interlayer film. Next, divisional positions (B) were set at positions of 20 cm from divisional positions (A) toward the other end side in the lengthwise direction of the interlayer film. In the obtained interlayer film, 20 divisional positions (A) and divisional positions (B) were set because divisional positions (A) were set in the lengthwise direction at 20 positions.
2) In each divisional position (A) and each divisional position (B), the interlayer film was cut out to obtain an interlayer film sample of 20 cm in the short-side direction (the lengthwise direction of the interlayer film) and having a long-side dimension and a thickness that are identical to the width and the thickness of the interlayer film. For cutting out the interlayer film, a single-edged razor blade was used. Since the divisional positions (A) were set at 20 positions in the obtained interlayer film, 20 interlayer film samples (cut pieces of interlayer film) were obtained. These 20 cut pieces of the interlayer film were named cut piece (1), cut piece (2), cut piece (3),..., and cut piece (20) in this order from a tip side of the outer periphery of the roll body of the interlayer film (one end side of the interlayer film). The cut piece (20) is an interlayer film sample located on a tip side of the internal circumference of the roll body of the interlayer film (the other end side of the interlayer film).
3) Each obtained cut piece of the interlayer film was sandwiched between two sheets of clear glass in conformity with JIS R3202:2011 and having a visible light transmittance of 90.4% and a thickness of 2.5 mm, and vacuum-pressed by retention at 90°C for 30 minutes with a vacuum laminator, and thus the stack was temporarily joined. Next, an autoclaving treatment at 130°C for 20 minutes was performed to obtain 20 laminated glasses. The clear glass had a short-side dimension of 20 cm and a long-side dimension identical to the width of the interlayer film. In this manner, laminated glass (1) prepared with cut piece (1), laminated glass (2) prepared with cut piece (2), laminated glass (3) prepared with cut piece (3),..., laminated glass (20) prepared with cut piece (20) were obtained.

(Examples 2 to 24 and Comparative Examples 1 and 2)

In Examples 2 to 24, the interlayer films as shown in Fig. 1 were prepared. In Comparative Examples 1 and 2, interlayer films similar to the interlayer film as shown in Fig. 1 were prepared. A laminated glass set was prepared with the obtained interlayer film in the same manner as in Example 1.
The composition, the blending amount, and the extrusion conditions of the resin composition for forming a first resin layer, and the composition, the blending amount, and the extrusion conditions of the resin composition for forming a second resin layer were changed to the conditions described in Table 1 to Table 6, and the width of the interlayer film was changed to the value described in Table 1 to Table 6. Besides this, an interlayer film for laminated glass, a roll body thereof and a laminated glass set were prepared in the same manner as that in Example 1. In the cases of extrusion conditions of the types a1, a2 and a3 in Table 2, a gear pump 2 was connected with the gear pump 1 in series at the time of extruding a resin composition for forming a first resin layer, and the conditions described in Table 2 were employed.

(Examples 25 to 27)

In Examples 25 to 27, a functional film (infrared reflective film) was sandwiched between the first resin layer and the second resin layer, and the third resin layer to prepare an interlayer film as shown in Fig. 19. A laminated glass set was prepared with the obtained interlayer film in the same manner as in Example 1.

(Examples 28 to 31)

In Examples 28 to 31, interlayer films as shown in Fig. 17 were prepared. A laminated glass set was prepared with the obtained interlayer film in the same manner as in Example 1. The third resin layer in the interlayer film of each of Examples 28 to 31 is a sound insulating layer.

(Evaluation)

(1) Measurement of visible light transmittance

Using a spectrophotometer ("U-4100" available from Hitachi High-Tech Science Corporation), visible light transmittance (Tv) was measured for laminated glasses (1) to (20) obtained in the manner as described above. Specifically, laminated glass (1) was placed at a position 13 cm apart from the integrating sphere on the optical path between the light source and the integrating sphere, in parallel with the normal line of the light axis such that only the parallel light having penetrated laminated glass (1) was received by the integrating sphere, and spectral transmittance was measured. From the obtained spectral transmittance, visible light transmittance of laminated glass (1) was calculated. In the same manner, visible light transmittance was calculated for laminated glasses (2) to (20). In this manner, visible light transmittance of laminated glass was measured along the widthwise direction of the interlayer film, and the maximum value ($Tv_{max}$) and the minimum value ($Tv_{min}$) of visible light transmittance were determined for laminated glasses (1) to (20). The measurement conditions included a scan speed: 300 nm/min, and a slit width: 8 nm, and other measurement conditions conformed to JIS R3106:1998.

(2) Measurement of distance X, distance Y, and distance Z

From the measurement results of measured visible light transmittance, each interlayer film in laminated glasses (1) to (20) was segmented into the following regions.

Light color part: the region where Tv is more than ($0.1Tv_{min} + 0.9Tv_{max}$), and $Tv_{max}$ or less

Gradation part: the region where Tv is ($0.9Tv_{min} + 0.1Tv_{max}$) or more, and ($0.1Tv_{min} + 0.9Tv_{max}$) or less, and Tv increases from one end side toward the other end side in the widthwise direction of the interlayer film

Dark color part: the region where Tv is $Tv_{min}$ or more, and less than ($0.9Tv_{min} + 0.1Tv_{max}$)

Colored part: the combined region of the dark color part and the gradation part

According to the above segmentation, distance X, distance Y, and distance Z were determined.

Distance X: the distance from one end in the widthwise direction of the interlayer film to a colored part on the other end side in the widthwise direction of the interlayer film (distance from one end in the widthwise direction of the interlayer film to a boundary between the light color part and the gradation part )

Distance Y: the distance from a tip of a colored part on one end side in the widthwise direction of the interlayer film, to a tip of a colored part on the other end side in the widthwise direction of the interlayer film (distance of the colored part in the direction connecting one end and the other end in the widthwise direction of the interlayer film)

Distance Z: the distance of gradation part in the direction connecting one end and the other end in the widthwise direction of the interlayer film

From the measurement results of distance X, distance Y, and distance Z of interlayer film in 20 laminated glasses (1) to (20), a maximum value $X_{max}$ of distance X, a minimum value $X_{min}$ of distance X, an average value $X_{ave}$ of distance X, a maximum value $Y_{max}$ of distance Y, a minimum value $Y_{min}$ of distance Y, an average value $Y_{ave}$ of distance Y, a maximum value $Z_{max}$ of distance Z, a minimum value $Z_{min}$ of distance Z, and an average value $Z_{ave}$ of distance Z were determined.

(3) Thicknesses of first resin layer and second resin layer in dark color part and light color part

An obtained interlayer film for laminated glass was cut parallel with the film thickness direction with a single-edged razor blade. Then, the cut cross section was observed with a microscope ("DSX-100" available from Olympus Corporation), and thicknesses of the first resin layer and the second resin layer in the dark color part and the light color part were measured using measurement software in the attached software. Specifically, each thickness was measured in the following manner.

Thickness in dark color part: thicknesses of the first resin layer and the second resin layer when cut at the position of $Tv_{min}$ and observed were measured.

Thickness in light color part: thicknesses of the first resin layer and the second resin layer when cut at the position of $Tv_{max}$ and observed were measured.

(4) Appearance designability (variation in position of tip of colored part (tip of gradation part))

20 laminated glasses (1) to (20) were arranged in the following first, second and third arrangement orders (the state shown in Fig. 23).

First arrangement order: (1), (2), (3), (4), (5), (6), (7), (8), (9), (10), (11), (12), (13), (14), (15), (16), (17), (18), (19), (20)
Second arrangement order: (1), (20), (2), (19), (3), (18), (4), (17), (5), (16), (6), (15), (7), (14), (8), (13), (9), (14), (10), (13), (11), (12)
Third arrangement order: (1), (11), (2), (12), (3), (13), (4), (14), (5), (15), (6), (16), (7), (17), (8), (18), (9), (19), (10), (20)

The position of the tip of the colored part (tip of the gradation part) was visually checked. In the first arrangement order, the first number of raters who answered that variation in the position of the tip of the colored part (tip of the gradation part) was large among ten raters was counted. In the second arrangement order, the second number of raters who answered that variation in the position of the tip of the colored part (tip of the gradation part) was large among ten raters was counted. In the third arrangement order, the third number of raters who answered that variation in the position of the tip of the colored part (tip of the gradation part) was large among ten raters was counted. Ten raters judged the appearance designability according to the following criteria.

[Criteria for judgement in appearance designability]

○○: average of the first number, the second number and the third number who answered that variation was large is 0 or less
◦: average of the first number, the second number and the third number who answered that variation was large is more than 0 and 2 or less.
Δ: average of the first number, the second number and the third number who answered that variation was large is more than 2 and 4 or less.
×: average of the first number, the second number and the third number who answered that variation was large is more than 4

Compositions and blending amounts of the resin compositions for forming the first, second, third, and fourth resin layers are shown in Table 1 below. Extrusion conditions in preparing interlayer films are shown in Table 2. The details and the results of interlayer films and laminated glasses are shown in the following Tables 3 to 8.

[Table 1]

| Kind of resin composition | | Composition of resin layer | | | | | | | | | | | |
|---|---|---|---|---|---|---|---|---|---|---|---|---|---|
| | | Thermoplastic resin | | | | | | Plasticizer | | Coloring agent | | Heat shielding particles | |
| | | Kind | Polymerization degree | Acetal group amount [mol%] | Hydroxyl group amount [mol%] | Acetyl group amount [mol%] | Content [parts by mass] | Kind | Content [parts by mass] | Kind | Content [% by mass] | Kind | Content [% by mass] |
| First resin layer | A1 | PVB1 | 1700 | 69 | 30 | 1 | 100 | 3GO | 40 | - | - | - | - |
| | A2 | PVB1 | 1700 | 69 | 30 | 1 | 100 | 3GO | 36 | - | - | - | - |
| | A3 | PVB1 | 1700 | 69 | 30 | 1 | 100 | 3GO | 40 | Black pigment | 0.013 | - | - |
| | A4 | PVB1 | 1700 | 69 | 30 | 1 | 100 | 3GO | 40 | Black pigment | 0.027 | - | - |
| | A5 | PVB1 | 1700 | 69 | 30 | 1 | 100 | 3GO | 40 | Blue pigment | 0.0064 | - | - |
| | A6 | PVB1 | 1700 | 69 | 30 | 1 | 100 | 3GO | 40 | - | - | ITO | 0.15 |
| | A7 | PVB1 | 1700 | 69 | 30 | 1 | 100 | 3GO | 40 | - | - | ITO | 0.6 |
| | A8 | PVB1 | 1700 | 69 | 30 | 1 | 100 | 3GO | 40 | - | - | CWO | 0.4 |

(continued)

| Kind of resin composition | | Composition of resin layer | | | | | | | | | | | |
|---|---|---|---|---|---|---|---|---|---|---|---|---|---|
| | | Thermoplastic resin | | | | | | Plasticizer | | Coloring agent | | Heat shielding particles | |
| | | Kind | Polymerization degree | Acetal group amount [mol%] | Hydroxyl group amount [mol%] | Acetyl group amount [mol%] | Content [parts by mass] | Kind | Content [parts by mass] | Kind | Content [% by mass] | Kind | Content [% by mass] |
| Second resin layer | B1 | PVB1 | 1700 | 69 | 30 | 1 | 100 | 3GO | 40 | Calcium carbonate | 6.13 | - | - |
| | B2 | PVB1 | 1700 | 69 | 30 | 1 | 100 | 3GO | 40 | Calcium carbonate | 4.67 | - | - |
| | B3 | PVB1 | 1700 | 69 | 30 | 1 | 100 | 3GO | 40 | Calcium carbonate | 3.07 | - | - |
| | B4 | PVB1 | 1700 | 69 | 30 | 1 | 100 | 3GO | 40 | Calcium carbonate | 7.73 | - | - |
| | B5 | PVB1 | 1700 | 69 | 30 | 1 | 100 | 3GO | 40 | Calcium carbonate | 3.87 | - | - |
| | B6 | PVB2 | 1700 | 70 | 18 | 12 | 100 | 3GO | 76 | Calcium carbonate | 6.13 | - | - |
| | B7 | PVB3 | 2300 | 70 | 18 | 12 | 100 | 3GO | 76 | Calcium carbonate | 6.13 | - | - |
| | B8 | PVB4 | 3300 | 70 | 18 | 12 | 100 | 3GO | 76 | Calcium carbonate | 6.13 | - | - |
| | B9 | PVB5 | 1700 | 74 | 18 | 8 | 100 | 3GO | 76 | Calcium carbonate | 6.13 | - | - |
| | B10 | PVB1 | 1700 | 69 | 30 | 1 | 100 | 3GO | 40 | Calcium carbonate | 2.7 | - | - |
| | C1 | PVB1 | 1700 | 69 | 30 | 1 | 100 | 3GO | 40 | Black pigment | 0.13 | - | - |
| | D1 | PVB1 | 1700 | 69 | 30 | 1 | 100 | 3GO | 40 | Blue pigment | 0.33 | - | - |

(continued)

| Kind of resin composition | | Composition of resin layer | | | | | | | | | | | |
|---|---|---|---|---|---|---|---|---|---|---|---|---|---|
| | | Thermoplastic resin | | | | | | Plasticizer | | Coloring agent | | Heat shielding particles | |
| | | Kind | Polymerization degree | Acetal group amount [mol%] | Hydroxyl group amount [mol%] | Acetyl group amount [mol%] | Content [parts by mass] | Kind | Content [parts by mass] | Kind | Content [% by mass] | Kind | Content [% by mass] |
| Third resin layer | E1 | PVB2 | 1700 | 70 | 18 | 12 | 100 | 3GO | 76 | - | - | - | - |
| | E2 | PVB4 | 3300 | 70 | 18 | 12 | 100 | 3GO | 76 | - | - | - | - |
| | E3 | PVB5 | 1700 | 74 | 18 | 8 | 100 | 3GO | 76 | - | - | - | - |
| | A1 | PVB1 | 1700 | 69 | 30 | 1 | 100 | 3GO | 40 | - | - | - | - |
| | A6 | PVB1 | 1700 | 69 | 30 | 1 | 100 | 3GO | 40 | - | - | ITO | 0.15 |
| Fourth resin layer | F1 | PVB1 | 1700 | 69 | 30 | 1 | 100 | 3GO | 36 | - | - | - | - |

[Table 2]

| Type of extrusion condition | Extruder for resin layer | |
|---|---|---|
| | Inlet pressure variation of gear pump 1 [$10^5$ Pa] | Inlet pressure variation of gear pump 2 [$10^5$ Pa] |
| a1 | 30 | 4 |
| a2 | 45 | 6 |
| a3 | 45 | 10 |
| a4 | 30 | - |
| a5 | 40 | - |
| a6 | 48 | - |
| a7 | 80 | - |
| a8 | 65 | - |
| b1 | 30 | - |
| b2 | 20 | - |

[Table 3]

| | | | | Example 1 | Example 2 | Example 3 | Example 4 | Example 5 | Example 6 |
|---|---|---|---|---|---|---|---|---|---|
| Blending condition, production condition | First resin layer | Material | [-] | A1 | A1 | A1 | A1 | A1 | A1 |
| | | Extrusion condition | [-] | a4 | a4 | a4 | a4 | a2 | a2 |
| | Second resin layer | Material | [-] | B1 | B2 | B3 | B4 | B1 | B3 |
| | | Extrusion condition | [-] | b1 | b1 | b1 | b2 | b1 | b1 |
| | Entire interlayer film | Sectional shape | [-] | Fig. 1 | Fig. 1 | Fig. 1 | Fig. 1 | Fig. 1 | Fig. 1 |
| | | Width | [mm] | 1800 | 1850 | 2600 | 2300 | 1800 | 1800 |

(continued)

| | | | | Example 1 | Example 2 | Example 3 | Example 4 | Example 5 | Example 6 |
|---|---|---|---|---|---|---|---|---|---|
| Colored part | Entire colored part | Xmax , Ymax | [mm] | 803 | 860 | 803 | 803 | 802 | 1005 |
| | | Xmin , Ymin | [mm] | 790 | 845 | 790 | 792 | 798 | 996 |
| | | Xave , Yave | [mm] | 800 | 850 | 800 | 800 | 800 | 1000 |
| | | \|Xmax - Xmin\| / Xave \|Ymax - Ymin\| / Yave | [-] | 0.016 | 0.018 | 0.016 | 0.014 | 0.005 | 0.009 |
| | Gradation part | Zmax | [mm] | 205 | 185 | 360 | 205 | 305 | 355 |
| | | Zmin | [mm] | 195 | 175 | 340 | 200 | 295 | 345 |
| | | Zave | [mm] | 200 | 180 | 350 | 195 | 300 | 350 |
| | | \|Zmax - Zmin\| / Zave | [-] | 0.050 | 0.056 | 0.057 | 0.026 | 0.033 | 0.029 |
| | Dark color part | Thickness of first resin layer | [μm] | 500 | 500 | 200 | 500 | 500 | 200 |
| | | Thickness of second resin layer | [μm] | 300 | 300 | 600 | 300 | 300 | 600 |
| | | Visible light transmittance | [%] | 1.0 | 3.0 | 1.0 | 0.5 | 1.0 | 1.0 |
| Light color part | | Thickness of first resin layer | [μm] | 800 | 800 | 800 | 800 | 800 | 800 |
| | | Thickness of second resin layer | [μm] | 0 | 0 | 0 | 0 | 0 | 0 |
| | | Maximum value of length in widthwise direction | [mm] | 1003 | 1010 | 1803 | 1503 | 1002 | 805 |
| | | Minimum value of length in widthwise direction | [mm] | 990 | 997 | 1790 | 1490 | 998 | 796 |
| | | Average value of length in widthwise direction | [mm] | 1000 | 1000 | 1800 | 1500 | 1000 | 800 |
| | | Visible light transmittance | [%] | 88 | 88 | 88 | 88 | 88 | 88 |
| Evaluation | Appearance designability | | [-] | ○ | ○ | ○ | ○ | ○○ | ○○ |

[Table 4]

| | | | | Example 7 | Example 8 | Example 9 | Example 10 | Example 11 | Example 12 |
|---|---|---|---|---|---|---|---|---|---|
| Blending condition, production condition | First resin layer | Material | [-] | A1 | A1 | A1 | A1 | A2 | A2 |
| | | Extrusion condition | [-] | a3 | a5 | a2 | a2 | a4 | a5 |
| | Second resin layer | Material | [-] | B4 | B5 | C1 | D1 | B6 | B7 |
| | | Extrusion condition | [-] | b1 | b1 | b1 | b1 | b2 | b2 |
| | Entire interlayer film | Sectional shape | [-] | Fig. 1 | Fig. 1 | Fig. 1 | Fig. 1 | Fig. 1 | Fig. 1 |
| | | Width | [mm] | 2600 | 1800 | 1800 | 1800 | 2300 | 2100 |
| Colored part | Entire colored part | Xmax , Ymax | [mm] | 605 | 305 | 1005 | 1005 | 805 | 815 |
| | | Xmin , Ymin | [mm] | 595 | 295 | 996 | 996 | 790 | 790 |
| | | Xave , Yave | [mm] | 600 | 300 | 1000 | 1000 | 800 | 800 |
| | | \|Xmax - Xmin / Xave<br>\|Ymax - Ymin / Yave | [-] | 0.017 | 0.033 | 0.009 | 0.009 | 0.019 | 0.031 |
| | Gradation part | Zmax | [mm] | 90 | 85 | 305 | 305 | 203 | 203 |
| | | Zmin | [mm] | 85 | 78 | 298 | 298 | 196 | 196 |
| | | Zave | [mm] | 87 | 80 | 300 | 300 | 200 | 200 |
| | | \|Zmax - Zmin / Zave | [-] | 0.057 | 0.088 | 0.023 | 0.023 | 0.035 | 0.035 |
| | Dark color part | Thickness of first resin layer | [μm] | 500 | 200 | 200 | 200 | 500 | 500 |
| | | Thickness of second resin layer | [μm] | 300 | 600 | 600 | 600 | 300 | 300 |
| | | Visible light transmittance | [%] | 0.5 | 0.5 | 1.0 | 1.6 | 1.0 | 1.0 |

(continued)

| | | | Example 7 | Example 8 | Example 9 | Example 10 | Example 11 | Example 12 |
|---|---|---|---|---|---|---|---|---|
| Light color part | Thickness of first resin layer | [μm] | 800 | 800 | 800 | 800 | 800 | 800 |
| | Thickness of second resin layer | [μm] | 0 | 0 | 0 | 0 | 0 | 0 |
| | Maximum value of length in widthwise direction | [mm] | 2002 | 1504 | 805 | 805 | 1505 | 1310 |
| | Minimum value of length in widthwise direction | [mm] | 1994 | 1495 | 796 | 796 | 1490 | 1290 |
| | Average value of length in widthwise direction | [mm] | 2000 | 1500 | 800 | 800 | 1500 | 1300 |
| | Visible light transmittance | [%] | 88 | 88 | 88 | 88 | 88 | 88 |
| Evaluation | Appearance designability | [-] | ○○ | ○○ | ○○ | ○○ | Δ | Δ |

[Table 5]

| | | | | Example 13 | Example 14 | Example 15 | Example 16 | Example 17 | Comparative Example 1 | Comparative Example 2 |
|---|---|---|---|---|---|---|---|---|---|---|
| Blending condition, production condition | First resin layer | Material | [-] | A2 | A1 | A1 | A1 | A1 | A1 | A1 |
| | | Extrusion condition | [-] | a5 | a6 | al | al | a8 | a7 | a7 |
| | Second resin layer | Material | [-] | B8 | B9 | B1 | B1 | B1 | B1 | B3 |
| | | Extrusion condition | [-] | b2 | b1 | b1 | b2 | b2 | b1 | b1 |
| | Entire interlayer film | Sectional shape | [-] | Fig. 1 | Fig. 1 | Fig. 1 | Fig. 1 | Fig. 1 | Fig. 1 | Fig. 1 |
| | | Width | [mm] | 1900 | 1815 | 1800 | 1801 | 1801 | 1800 | 1790 |
| Colored part | Entire colored part | Xmax , Ymax | [mm] | 815 | 830 | 804 | 802 | 835 | 880 | 880 |
| | | Xmin , Ymin | [mm] | 790 | 790 | 797 | 797 | 760 | 790 | 790 |
| | | Xave , Yave | [mm] | 800 | 815 | 800 | 801 | 793 | 800 | 790 |
| | | \|Xmax - Xmin\| / Xave<br>\|Ymax - Ymin\| / Yave | [-] | 0.031 | 0.049 | 0.009 | 0.006 | 0.095 | 0.113 | 0.114 |
| | Gradation part | Zmax | [mm] | 203 | 210 | 203 | 202 | 209 | 320 | 365 |
| | | Zmin | [mm] | 197 | 195 | 198 | 198 | 191 | 285 | 341 |
| | | Zave | [mm] | 200 | 200 | 200 | 200 | 200 | 300 | 350 |
| | | \|Zmax - Zmin / Zave | [-] | 0.030 | 0.075 | 0.025 | 0.020 | 0.090 | 0.117 | 0.069 |
| | Dark color part | Thickness of first resin layer | [μm] | 500 | 500 | 500 | 500 | 500 | 500 | 200 |
| | | Thickness of second resin layer | [μm] | 300 | 300 | 300 | 300 | 300 | 300 | 600 |
| | | Visible light transmittance | [%] | 1.0 | 1.0 | 1.0 | 1.0 | 1.0 | 1.0 | 1.0 |

(continued)

| | | | Example 13 | Example 14 | Example 15 | Example 16 | Example 17 | Comparative Example 1 | Comparative Example 2 |
|---|---|---|---|---|---|---|---|---|---|
| Light color part | Thickness of first resin layer | [μm] | 800 | 800 | 800 | 800 | 800 | 800 | 800 |
| | Thickness of second resin layer | [μm] | 0 | 0 | 0 | 0 | 0 | 0 | 0 |
| | Maximum value of length in widthwise direction | [mm] | 1108 | 1015 | 1003 | 1003 | 1003 | 1080 | 1090 |
| | Minimum value of length in widthwise direction | [mm] | 1090 | 975 | 990 | 990 | 990 | 990 | 1000 |
| | Average value of length in widthwise direction | [mm] | 1100 | 1000 | 1000 | 1000 | 1000 | 1000 | 1000 |
| | Visible light transmittance | [%] | 88 | 88 | 88 | 88 | 88 | 88 | 88 |
| Evaluation | Appearance designability | [-] | Δ | Δ | ○○ | ○○ | Δ | × | × |

[Table 6]

| | | | | Example 18 | Example 19 | Example 20 | Example 21 | Example 22 | Example 23 | Example 24 |
|---|---|---|---|---|---|---|---|---|---|---|
| Blending condition, production condition | First resin layer | Material | [-] | A3 | A4 | A5 | A7 | A8 | A1 | A1 |
| | | Extrusion condition | [-] | a4 | a4 | a4 | a4 | a4 | a4 | a4 |
| | Second resin layer | Material | [-] | B1 | B2 | B2 | B3 | B3 | B5 | B10 |
| | | Extrusion condition | [-] | bl | bl | bl | bl | bl | bl | bl |
| | Entire interlayer film | Sectional shape | [-] | Fig. 1 | Fig. 1 | Fig. 1 | Fig. 1 | Fig. 1 | Fig. 1 | Fig. 1 |
| | | Width | [mm] | 1450 | 1850 | 1100 | 1200 | 2600 | 1800 | 1800 |
| Colored part | Entire colored part | Xmax , Ymax | [mm] | 803 | 860 | 860 | 803 | 803 | 803 | 803 |
| | | Xmin , Ymin | [mm] | 790 | 845 | 845 | 790 | 790 | 790 | 790 |
| | | Xave , Yave | [mm] | 800 | 850 | 850 | 800 | 800 | 800 | 800 |
| | | \|Xmax - Xmin / Xave<br>\|Ymax - Ymin / Yave | [-] | 0.016 | 0.018 | 0.018 | 0.016 | 0.016 | 0.016 | 0.016 |
| | Gradation part | Zmax | [mm] | 205 | 185 | 185 | 360 | 360 | 205 | 205 |
| | | Zmin | [mm] | 195 | 175 | 175 | 340 | 340 | 195 | 195 |
| | | Zave | [mm] | 200 | 180 | 180 | 350 | 350 | 200 | 200 |
| | | \|Zmax - Zmin / Zave | [-] | 0.050 | 0.056 | 0.056 | 0.057 | 0.057 | 0.050 | 0.050 |
| | Dark color part | Thickness of first resin layer | [μm] | 500 | 500 | 500 | 200 | 200 | 500 | 500 |
| | | Thickness of second resin layer | [μm] | 300 | 300 | 300 | 600 | 600 | 300 | 300 |
| | | Visible light transmittance | [%] | 0.9 | 2.1 | 0.6 | 1.0 | 0.9 | 4.9 | 9.7 |

(continued)

| | | | Example 18 | Example 19 | Example 20 | Example 21 | Example 22 | Example 23 | Example 24 |
|---|---|---|---|---|---|---|---|---|---|
| Light color part | Thickness of first resin layer | [μm] | 800 | 800 | 800 | 800 | 800 | 800 | 800 |
| | Thickness of second resin layer | [μm] | 0 | 0 | 0 | 0 | 0 | 0 | 0 |
| | Maximum value of length in widthwise direction | [mm] | 653 | 1010 | 260 | 403 | 1803 | 1003 | 1003 |
| | Minimum value of length in widthwise direction | [mm] | 640 | 997 | 243 | 390 | 1790 | 990 | 990 |
| | Average value of length in widthwise direction | [mm] | 650 | 1000 | 250 | 400 | 1800 | 1000 | 1000 |
| | Visible light transmittance | [%] | 71 | 62 | 42 | 87 | 80 | 88 | 88 |
| Evaluation | Appearance designability | [-] | ○ | ○ | ○ | ○ | ○ | ○ | ○ |

[Table 7]

| | | | | Example 25 | Example 26 | Example 27 |
|---|---|---|---|---|---|---|
| Blending condition, production condition | First resin layer | Material | [-] | A1 | A1 | A6 |
| | | Extrusion condition | [-] | a4 | a4 | a4 |
| | Second resin layer | Material | [-] | B4 | B4 | B4 |
| | | Extrusion condition | [-] | b2 | b2 | b2 |
| | Functional film | | [-] | 3M905 | XIR | 3M905 |
| | Third resin layer | Material | [-] | A1 | A1 | A6 |
| | | Extrusion condition | [-] | a4 | a4 | a4 |
| | Entire interlayer film | Sectional shape | [-] | Fig. 19 | Fig. 19 | Fig. 19 |
| | | Width | [mm] | 2300 | 2300 | 2300 |
| Colored part | Entire colored part | Xmax , Ymax | [mm] | 803 | 803 | 803 |
| | | Xmin , Ymin | [mm] | 792 | 792 | 792 |
| | | Xave , Yave | [mm] | 800 | 800 | 800 |
| | | \|Xmax - Xmin / Xave<br>\|Ymax - Ymin / Yave | [-] | 0.014 | 0.014 | 0.014 |
| | Gradation part | Zmax | [mm] | 205 | 205 | 205 |
| | | Zmin | [mm] | 200 | 200 | 200 |
| | | Zave | [mm] | 195 | 195 | 195 |
| | | \|Zmax - Zmin / Zave | [-] | 0.026 | 0.026 | 0.026 |
| | Dark color part | Thickness of first resin layer | [μm] | 500 | 500 | 500 |
| | | Thickness of second resin layer | [μm] | 300 | 300 | 300 |
| | | Visible light transmittance | [%] | 0.5 | 0.4 | 0.4 |
| Light color part | | Thickness of first resin layer | [μm] | 800 | 800 | 800 |
| | | Thickness of second resin layer | [μm] | 0 | 0 | 0 |
| | | Maximum value of length in widthwise direction | [mm] | 1503 | 1503 | 1503 |
| | | Minimum value of length in widthwise direction | [mm] | 1490 | 1490 | 1490 |
| | | Average value of length in widthwise direction | [mm] | 1500 | 1500 | 1500 |
| | | Visible light transmittance | [%] | 87 | 77 | 86 |
| Evaluation | Appearance designability | | [-] | ○ | ○ | ○ |

[Table 8]

| | | | | Example 28 | Example 29 | Example 30 | Example 31 |
|---|---|---|---|---|---|---|---|
| Blending condition, production condition | First resin layer | Material | [-] | A2 | A2 | A2 | A2 |
| | | Extrusion condition | [-] | a4 | a4 | a5 | a5 |
| | Second resin layer | Material | [-] | B3 | B3 | B5 | B5 |
| | | Extrusion condition | [-] | bl | bl | bl | bl |
| | Third resin layer | Material | [-] | E1 | E3 | E1 | E2 |
| | | Extrusion condition | [-] | A1 | A1 | A1 | A1 |
| | Fourth resin layer | Material | [-] | F1 | F1 | F1 | F1 |
| | | Extrusion condition | [-] | a4 | a4 | a5 | a5 |
| | Entire interlayer film | Sectional shape | [-] | Fig. 17 | Fig. 17 | Fig. 17 | Fig. 17 |
| | | Width | [mm] | 2600 | 2600 | 1800 | 1800 |
| Colored part | Entire colored part | Xmax , Ymax | [mm] | 806 | 809 | 308 | 308 |
| | | Xmin , Ymin | [mm] | 787 | 791 | 292 | 292 |
| | | Xave , Yave | [mm] | 800 | 800 | 300 | 300 |
| | | \|Xmax - Xmin\| / Xave<br>\|Ymax - Ymin\| / Yave | [-] | 0.024 | 0.023 | 0.053 | 0.053 |
| | Gradation part | Zmax | [mm] | 362 | 365 | 84 | 84 |
| | | Zmin | [mm] | 338 | 340 | 76 | 76 |
| | | Zave | [mm] | 350 | 350 | 80 | 80 |
| | | \|Zmax - Zmin / Zave | [-] | 0.069 | 0.071 | 0.100 | 0.100 |
| | Dark color part | Thickness of first resin layer | [μm] | 200 | 200 | 200 | 200 |
| | | Thickness of second resin layer | [μm] | 600 | 600 | 600 | 600 |
| | | Visible light transmittance | [%] | 1.0 | 1.0 | 0.5 | 0.5 |
| Light color part | | Thickness of first resin layer | [μm] | 800 | 800 | 800 | 800 |
| | | Thickness of second resin layer | [μm] | 0 | 0 | 0 | 0 |
| | | Maximum value of length in widthwise direction | [mm] | 1801 | 1803 | 1504 | 1504 |
| | | Minimum value of length in widthwise direction | [mm] | 1799 | 1798 | 1495 | 1495 |
| | | Average value of length in widthwise direction | [mm] | 1800 | 1800 | 1500 | 1500 |
| | | Visible light transmittance | [%] | 88 | 88 | 88 | 88 |
| Evaluation | Appearance designability | | [-] | Δ | Δ | Δ | Δ |

**EXPLANATION** OF SYMBOLS

1, 1A, 1B, 1C, 1D, 1E, 1F, 1G: First resin layer
2, 2A, 2B, 2C, 2D, 2E, 2F, 2G: Second resin layer
2X, 2AX, 2CX, 2DX, 2EX, 2FX, 2GX, 4GX: Gradation part
2BX: First gradation part
2Y, 2AY, 2CY, 2DY, 2EY, 2FY, 2GY, 4GY: Dark color part
2BZ: Second gradation part
3E, 3F, 3G: Third resin layer
4E, 4G: Fourth resin layer
5F: Functional film
11, 11A, 11B, 11C, 11D, 11E, 11F, 11G: Interlayer film
11P, 11AP, 11BP, 11CP, 11DP, 11EP, 11FP, 11GP: Interlayer film part
11a, 11Aa, 11Ba, 11ca, 11Da, 11Ea, 11Fa, 11Ga: One end (one end in widthwise direction of interlayer film)
11b, 11Ab, 11Bb, 11cb, 11Db, 11Eb, 11Fb, 11Gb: Other end (other end in widthwise direction of interlayer film)
21: First lamination glass member
22: Second lamination glass member
31, 31A, 31B, 31C, 31D, 31E, 31F, 31G: Laminated glass
51, 51A, 51B: Roll body
61: Winding core
71: Laminated glass set
81, 82: Laminated glass structure
91, 92: Connecting member
Q: Coloring agent

## Claims

1. An interlayer film for laminated glass having a lengthwise direction and a widthwise direction, and a length of 30 m or more in the lengthwise direction,

   the interlayer film having a colored part,
   the colored part having a gradation part where visible light transmittance increases from one end side toward the other end side in the widthwise direction, the gradation part forming a tip of the colored part on the other end side in the widthwise direction,
   when distance X from one end in the widthwise direction to a tip of the colored part on the other end side in the widthwise direction is measured in the lengthwise direction at 1.5 m intervals, and a maximum value of distance X is denoted by $X_{max}$, a minimum value of distance X is denoted by $X_{min}$, and an average value of distance X is denoted by $X_{ave}$, the interlayer film satisfying the following formula (1), or when distance Y from a tip of the colored part on one end side in the widthwise direction to a tip of the colored part on the other end side in the widthwise direction is measured in the lengthwise direction at 1.5 m intervals, and a maximum value of distance Y is denoted by $Y_{max}$, a minimum value of distance Y is denoted by $Y_{min}$, and an average value of distance Y is denoted by $Y_{ave}$, the interlayer film satisfying the following formula (2):

$$(|X_{max} - X_{min}|)/X_{ave} \leq 0.1 \quad \text{Formula (1)}$$

$$(|Y_{max} - Y_{min}|)/Y_{ave} \leq 0.1 \quad \text{Formula (2).}$$

2. The interlayer film for laminated glass according to claim 1, wherein the interlayer film satisfies the formula (1).

3. The interlayer film for laminated glass according to claim 2, wherein the $X_{min}$ is 0.6 m or more.

4. The interlayer film for laminated glass according to any one of claims 1 to 3, wherein a tip of the colored part on one end side in the widthwise direction reaches one end in the widthwise direction.

**5.** The interlayer film for laminated glass according to any one of claims 1 to 4, wherein the interlayer film satisfies the formula (2).

**6.** The interlayer film for laminated glass according to claim 5, wherein the $Y_{min}$ is 0.6 m or more.

**7.** The interlayer film for laminated glass according to any one of claims 1 to 6, wherein when distance Z of the gradation part in a direction connecting one end and the other end in the widthwise direction is measured at 1.5 m intervals in the lengthwise direction, and a maximum value of distance Z is denoted by $Z_{max}$, a minimum value of distance Z is denoted by $Z_{min}$, an average value of distance Z is denoted by $Z_{ave}$, the interlayer film satisfies following formula (3):

$$(|Z_{max} - Z_{min}|)/Z_{ave} \leq 0.1 \quad \text{Formula (3).}$$

**8.** The interlayer film for laminated glass according to any one of claims 1 to 7, wherein the colored part has a dark color part located closer to one end in the widthwise direction than the gradation part.

**9.** The interlayer film for laminated glass according to any one of claims 1 to 8, wherein

the interlayer film includes a first resin layer and a second resin layer,
the first resin layer is arranged on a first surface side of the second resin layer,
the second resin layer contains a coloring agent, and
the second resin layer forms the colored part.

**10.** The interlayer film for laminated glass according to claim 9, wherein the coloring agent includes calcium carbonate particles.

**11.** A roll body comprising:

a winding core, and
the interlayer film for laminated glass according to any one of claims 1 to 10,
the interlayer film for laminated glass being wound around an outer periphery of the winding core in the lengthwise direction of the interlayer film for laminated glass.

**12.** A method for producing a laminated glass set, the method comprising:

a step of cutting one of the interlayer film for laminated glass according to any one of claims 1 to 10 in the lengthwise direction to obtain a plurality of cut pieces, and
a step of preparing a plurality of first lamination glass members and a plurality of second lamination glass members for obtaining a plurality of laminated glasses, and arranging each cut piece as an interlayer film part between each of the first lamination glass members and each of the second lamination glass members to obtain a plurality of laminated glasses.

**Patentansprüche**

**1.** Zwischenschichtfolie für Verbundglas mit einer Längsrichtung und einer Breitenrichtung und einer Länge von 30 m oder mehr in der Längsrichtung,

wobei die Zwischenschichtfolie einen farbigen Teil aufweist,
wobei der farbige Teil einen abgestuften Teil aufweist, bei dem die Durchlässigkeit für sichtbares Licht von einer Endseite zu der anderen Endseite in der Breitenrichtung zunimmt, wobei der abgestufte Teil eine Spitze des farbigen Teils auf der anderen Endseite in der Breitenrichtung bildet,
wobei, wenn der Abstand X von einem Ende in der Breitenrichtung zu einer Spitze des farbigen Teils an der anderen Endseite in der Breitenrichtung in der Längsrichtung in 1,5 m-Intervallen gemessen wird und ein Maximalwert des Abstands X mit $X_{max}$ bezeichnet wird, ein Minimalwert des Abstands X mit $X_{min}$ bezeichnet wird und ein Durchschnittswert des Abstands X mit $X_{ave}$ bezeichnet wird, die Zwischenschichtfolie die folgende Formel (1) erfüllt, oder, wenn der Abstand Y von einer Spitze des farbigen Teils auf einer Endseite in der Breitenrichtung zu einer Spitze des farbigen Teils auf der anderen Endseite in der Breitenrichtung in der Längsrichtung in 1,5 m-Intervallen gemessen wird, und ein Maximalwert des Abstands Y mit $Y_{max}$ bezeichnet wird, ein Minimalwert des Abstands Y mit $Y_{min}$ bezeichnet wird und ein Durchschnittswert des Abstands Y mit $Y_{ave}$ bezeichnet wird, die Zwischenschichtfolie die folgende Formel (2) erfüllt:

$$(|X_{max} - X_{min}|)/X_{ave} \leq 0,1 \text{ Formel (1)}$$

$$(|Y_{max} - Y_{min}|)/Y_{ave} \leq 0,1 \text{ Formel (2)}.$$

2. Zwischenschichtfolie für Verbundglas nach Anspruch 1, wobei die Zwischenschichtfolie die Formel (1) erfüllt.

3. Zwischenschichtfolie für Verbundglas nach Anspruch 2, wobei der $X_{min}$ 0,6 m oder mehr beträgt.

4. Zwischenschichtfolie für Verbundglas nach einem der Ansprüche 1 bis 3, wobei eine Spitze des farbigen Teils an einer Endseite in der Breitenrichtung ein Ende in der Breitenrichtung erreicht.

5. Zwischenschichtfolie für Verbundglas nach einem der Ansprüche 1 bis 4, wobei die Zwischenschichtfolie die Formel (2) erfüllt.

6. Zwischenschichtfolie für Verbundglas nach Anspruch 5, wobei der $Y_{min}$ 0,6 m oder mehr beträgt.

7. Zwischenschichtfolie für Verbundglas nach einem der Ansprüche 1 bis 6, wobei, wenn der Abstand Z des abgestuften Teils in einer Richtung, die ein Ende und das andere Ende in der Breitenrichtung verbindet, in 1,5 m-Intervallen in der Längsrichtung gemessen wird, und ein Maximalwert des Abstands Z mit $Z_{max}$ bezeichnet wird, ein Minimalwert des Abstands Z mit $Z_{min}$ bezeichnet wird, ein Durchschnittswert des Abstands Z mit $Z_{ave}$ bezeichnet wird, die Zwischenschichtfolie die folgende Formel (3) erfüllt:

$$(|Z_{max} - Z_{min}|)/Z_{ave} \leq 0,1 \text{ Formel (3)}.$$

8. Zwischenschichtfolie für Verbundglas nach einem der Ansprüche 1 bis 7, wobei der farbige Teil einen dunkelfarbigen Teil aufweist, der in der Breitenrichtung näher an einem Ende liegt als der abgestufte Teil.

9. Zwischenschichtfolie für Verbundglas nach einem der Ansprüche 1 bis 8, wobei die Zwischenschichtfolie eine erste Harzschicht und eine zweite Harzschicht umfasst,

die erste Harzschicht auf einer ersten Oberflächenseite der zweiten Harzschicht angeordnet ist,
die zweite Harzschicht ein Färbemittel enthält, und
die zweite Harzschicht den farbigen Teil bildet.

10. Zwischenschichtfolie für Verbundglas nach Anspruch 9, wobei das Färbemittel Calciumcarbonatteilchen enthält.

11. Walzenkörper, umfassend:

einen Wickelkern, und
die Zwischenschichtfolie für Verbundglas nach einem der Ansprüche 1 bis 10,
wobei die Zwischenschichtfolie für Verbundglas um einen Außenumfang des Wickelkerns in der Längsrichtung der Zwischenschichtfolie für Verbundglas gewickelt ist.

12. Verfahren zur Herstellung eines Verbundglassatzes, wobei das Verfahren umfasst:

einen Schritt des Schneidens einer der Zwischenschichtfolien für Verbundglas nach einem der Ansprüche 1 bis 10 in der Längsrichtung, um eine Vielzahl von geschnittenen Stücken zu erhalten, und
einen Schritt des Vorbereitens einer Vielzahl von ersten Verbundglaselementen und einer Vielzahl von zweiten Verbundglaselementen, um eine Vielzahl von Verbundgläsern zu erhalten, und des Anordnens jedes geschnittenen Stücks als ein Zwischenschichtfolienteil zwischen jedem der ersten Verbundglaselemente und jedem der zweiten Verbundglaselemente, um eine Vielzahl von Verbundgläsern zu erhalten.

## Revendications

1. Film intercouche pour verre feuilleté ayant une direction de longueur et une direction de largeur, et une longueur de 30 m ou plus dans la direction de longueur,

   le film intercouche ayant une partie colorée,
   la partie colorée ayant une partie de gradation où un facteur de transmission de la lumière visible augmente depuis un côté d'extrémité vers l'autre côté d'extrémité dans la direction de largeur, la partie de gradation formant un bout de la partie colorée de l'autre côté d'extrémité dans la direction de largeur,
   lorsque la distance X d'une extrémité dans la direction de largeur jusqu'à un bout de la partie colorée de l'autre côté d'extrémité dans la direction de largeur est mesurée dans la direction de longueur à des intervalles de 1,5 m, et qu'une valeur maximale de la distance X est notée $X_{max}$, qu'une valeur minimale de la distance X est notée $X_{min}$ et qu'une valeur moyenne de la distance X est notée $X_{ave}$, le film intercouche satisfait à la formule (1) suivante, ou lorsque la distance Y depuis un bout de la partie colorée d'un côté d'extrémité dans la direction de largeur jusqu'à un bout de la partie colorée sur l'autre côté d'extrémité dans la direction de largeur est mesurée dans la direction de longueur à des intervalles de 1,5 m, et qu'une valeur maximale de la distance Y est notée $Y_{max}$, qu'une valeur minimale de la distance Y est notée $Y_{min}$ et qu'une valeur moyenne de la distance Y est notée $Y_{ave}$, le film intercouche satisfait à la formule (2) suivante :

$$(|X_{max} - X_{min}|)/X_{ave} \leq 0{,}1 \text{ Formule (1)}$$

$$(|Y_{max} - Y_{min}|)/Y_{ave} \leq 0{,}1 \text{ Formule (2).}$$

2. Film intercouche pour verre feuilleté selon la revendication 1, dans lequel le film intercouche satisfait à la formule (1).

3. Film intercouche pour verre feuilleté selon la revendication 2, dans lequel $X_{min}$ est de 0,6 m ou plus.

4. Film intercouche pour verre feuilleté selon l'une quelconque des revendications 1 à 3, dans lequel un bout de la partie colorée sur un côté d'extrémité dans la direction de largeur atteint une extrémité dans la direction de largeur.

5. Film intercouche pour verre feuilleté selon l'une quelconque des revendications 1 à 4, dans lequel le film intercouche satisfait à la formule (2).

6. Film intercouche pour verre feuilleté selon la revendication 5, dans lequel $Y_{min}$ est de 0,6 m ou plus.

7. Film intercouche pour verre feuilleté selon l'une quelconque des revendications 1 à 6, dans lequel lorsque la distance Z de la partie de gradation dans une direction reliant une extrémité et l'autre extrémité dans la direction de largeur est mesurée à des intervalles de 1,5 m dans la direction de longueur, et qu'une valeur maximale de la distance Z est notée $Z_{max}$, qu'une valeur minimale de la distance Z est notée $Z_{min}$, qu'une valeur moyenne de la distance Z est notée $Z_{ave}$, le film intercouche satisfait à la formule (3) suivante :

$$(|Z_{max} - Z_{min}|)/Z_{ave} \leq 0{,}1 \text{ Formule (3).}$$

8. Film intercouche pour verre feuilleté selon l'une quelconque des revendications 1 à 7, dans lequel la partie colorée a une partie de couleur sombre située plus près d'une extrémité dans la direction de largeur que la partie de gradation.

9. Film intercouche pour verre feuilleté selon l'une quelconque des revendications 1 à 8, dans lequel

   le film intercouche inclut une première couche de résine et une seconde couche de résine,
   la première couche de résine est disposée sur un premier côté de surface de la seconde couche de résine,
   la seconde couche de résine contient un agent colorant, et
   la seconde couche de résine forme la partie colorée.

10. Film intercouche pour verre feuilleté selon la revendication 9, dans lequel l'agent colorant inclut des particules de carbonate de calcium.

**11.** Corps de rouleau comportant :

un mandrin d'enroulement, et
le film intercouche pour verre feuilleté selon l'une quelconque des revendications 1 à 10,
le film intercouche pour verre feuilleté étant enroulé autour d'une périphérie extérieure du mandrin d'enroulement dans la direction de longueur du film intercouche pour verre feuilleté.

**12.** Procédé destiné à produire un ensemble de verres feuilletés, le procédé comportant :

une étape consistant à découper l'un des films intercouche pour verre feuilleté selon l'une quelconque des revendications 1 à 10 dans la direction de longueur pour obtenir une pluralité de morceaux coupés, et
une étape consistant à préparer une pluralité de premiers éléments de verre de feuilletage et une pluralité de seconds éléments de verre de feuilletage pour obtenir une pluralité de verres feuilletés, et disposer chaque morceau coupé comme une partie de film intercouche entre chacun des premiers éléments de verre de feuilletage et chacun des seconds éléments de verre de feuilletage afin d'obtenir une pluralité de verres feuilletés.

[FIG. 1.]

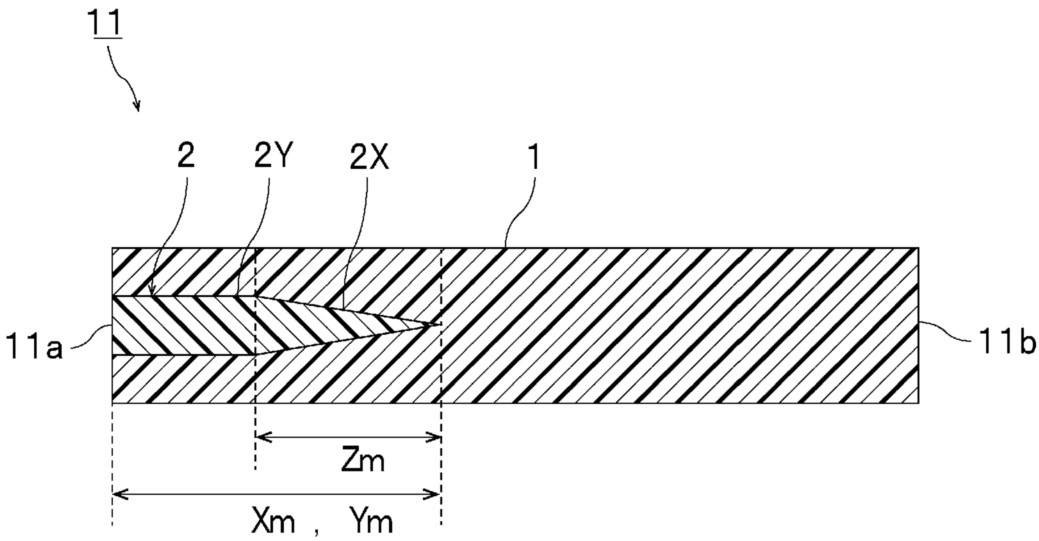


[FIG. 2.]

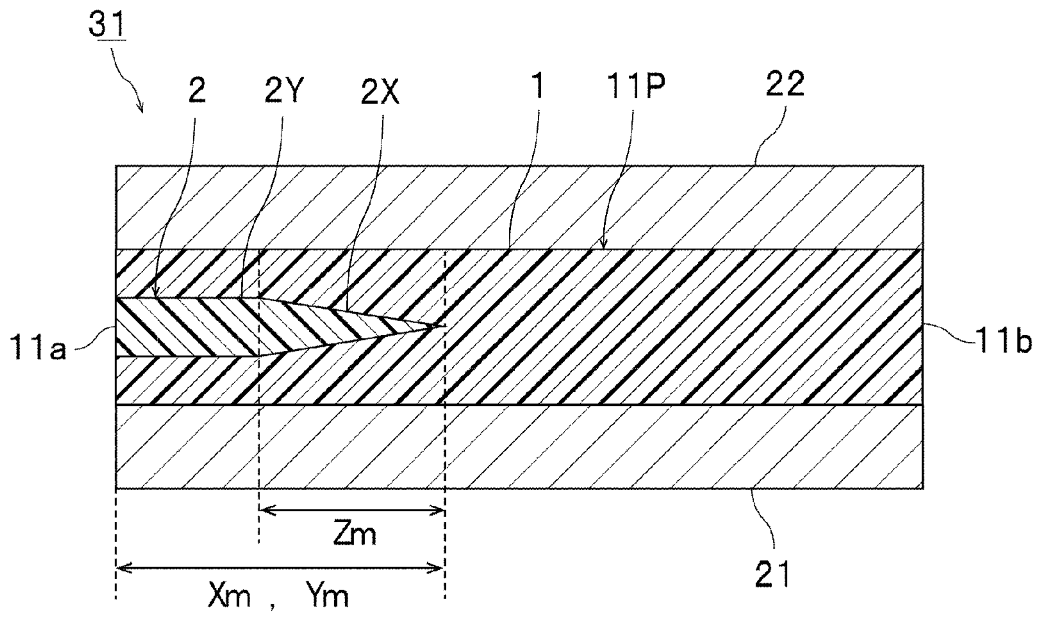

[FIG. 3.]

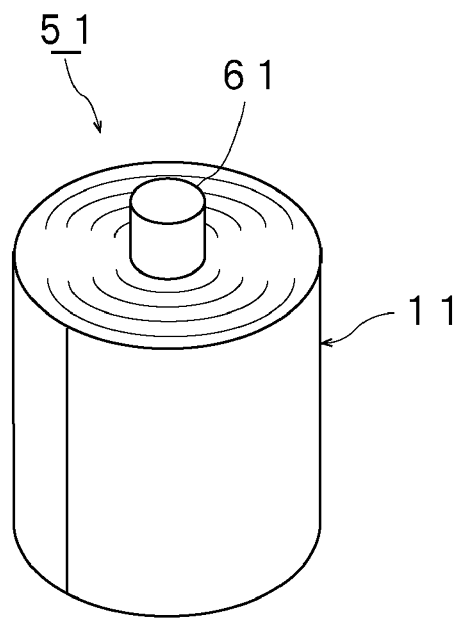


[FIG. 4.]

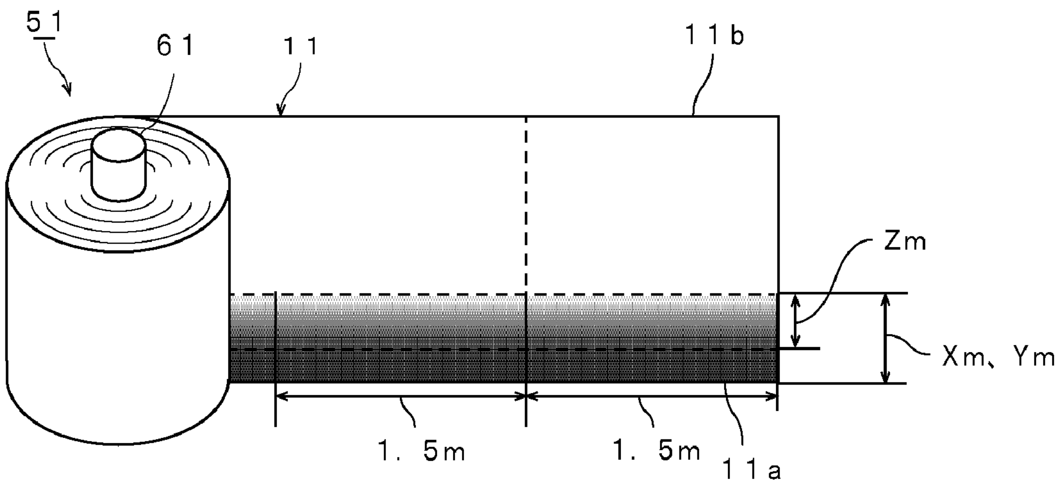

[FIG. 5.]

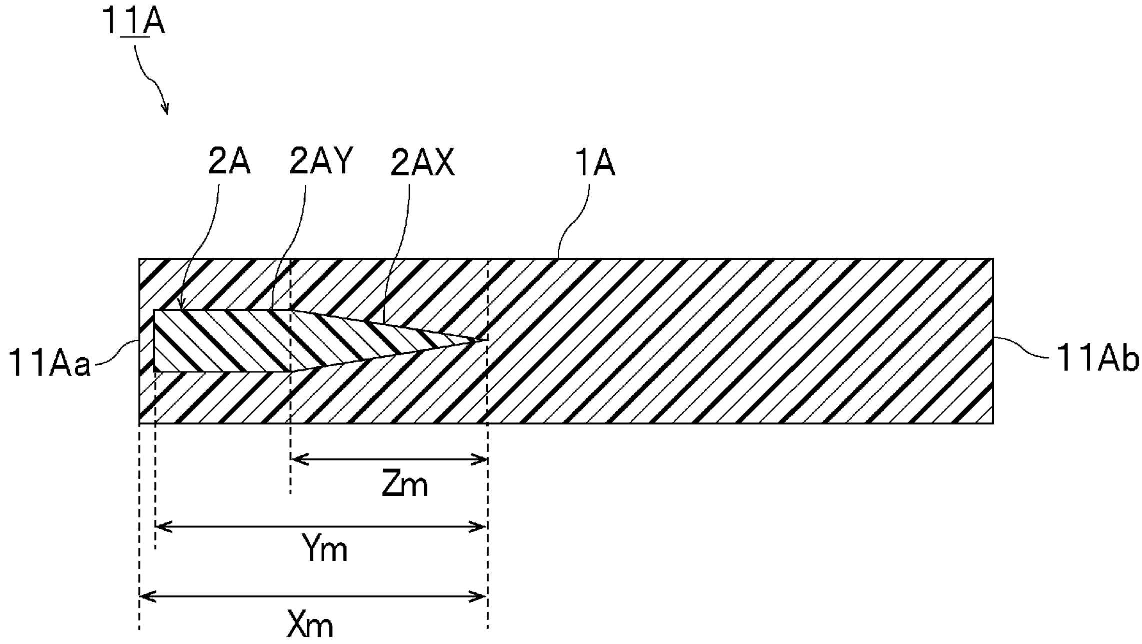
11A
2A
2AY
2AX
1A
11Aa
11Ab
Zm
Ym
Xm

[FIG. 6.]

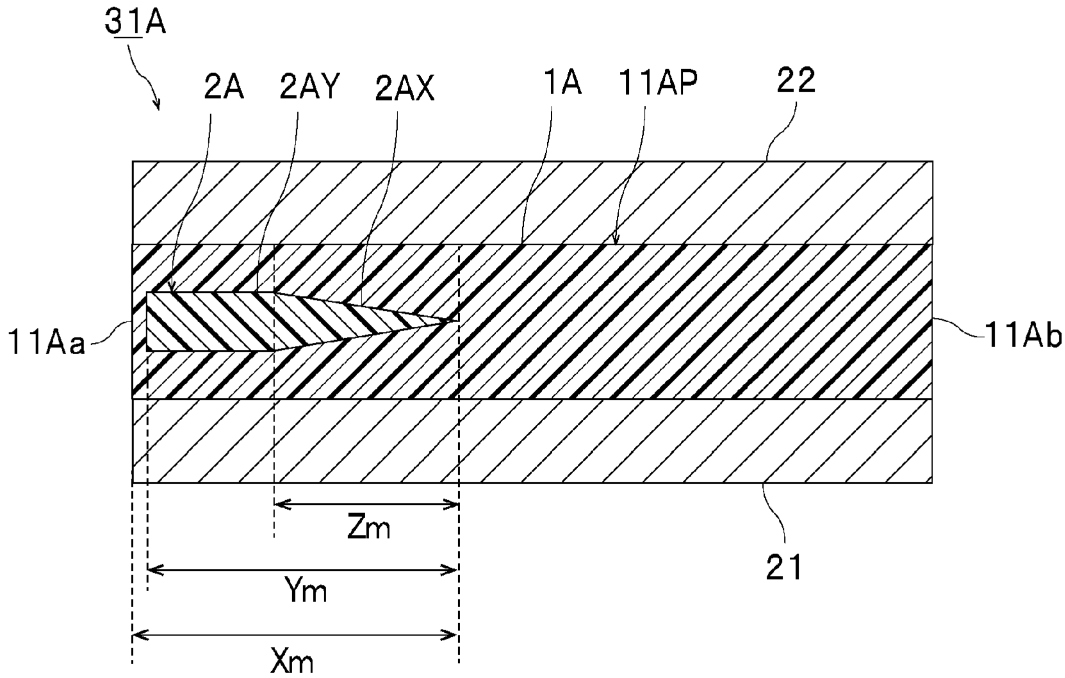
31A
2A
2AY
2AX
1A
11AP
22
11Aa
11Ab
Zm
21
Ym
Xm

[FIG. 7.]

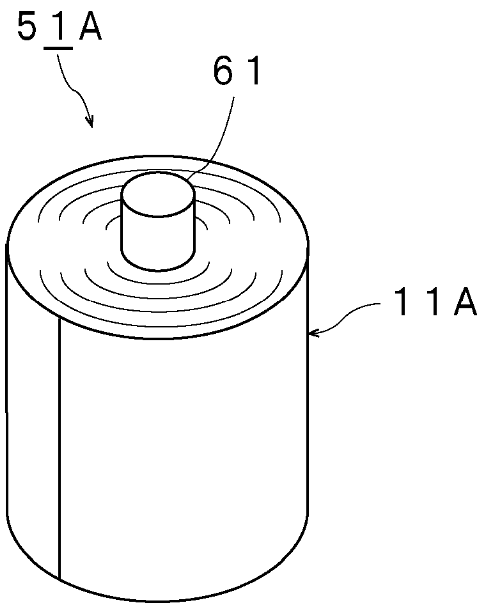


[FIG. 8.]

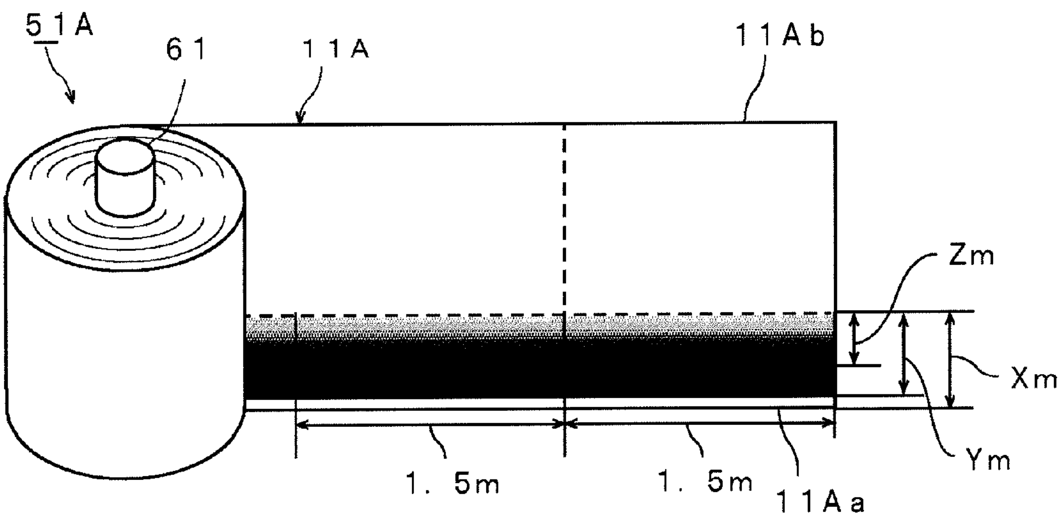

[FIG. 9.]

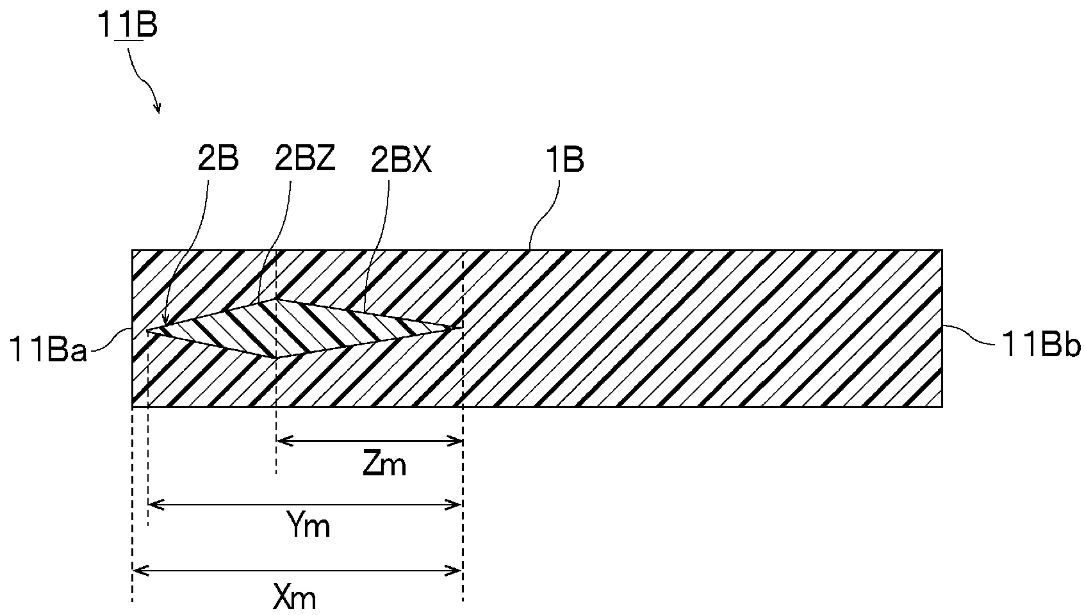
11B
2B
2BZ
2BX
1B
11Ba
11Bb
Zm
Ym
Xm

[FIG. 10.]

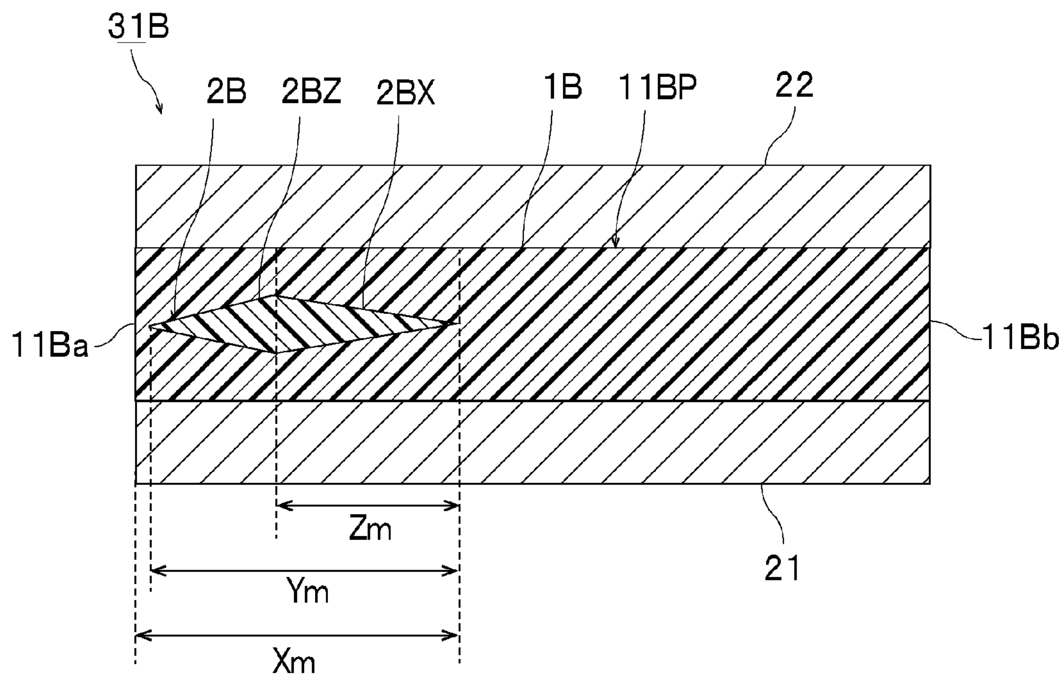
31B
2B
2BZ
2BX
1B
11BP
22
11Ba
11Bb
Zm
21
Ym
Xm

[FIG. 11.]

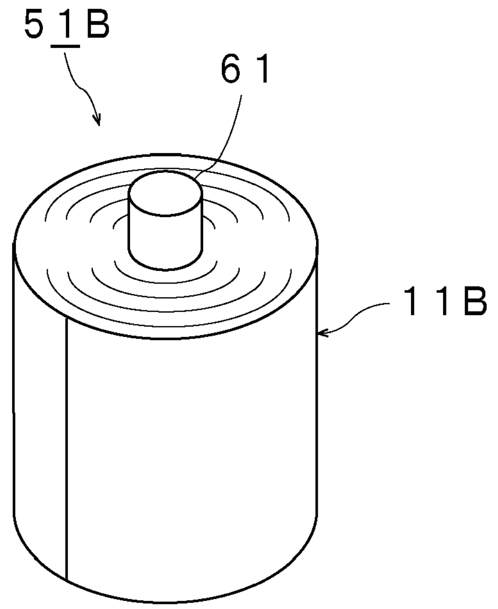


[FIG. 12.]

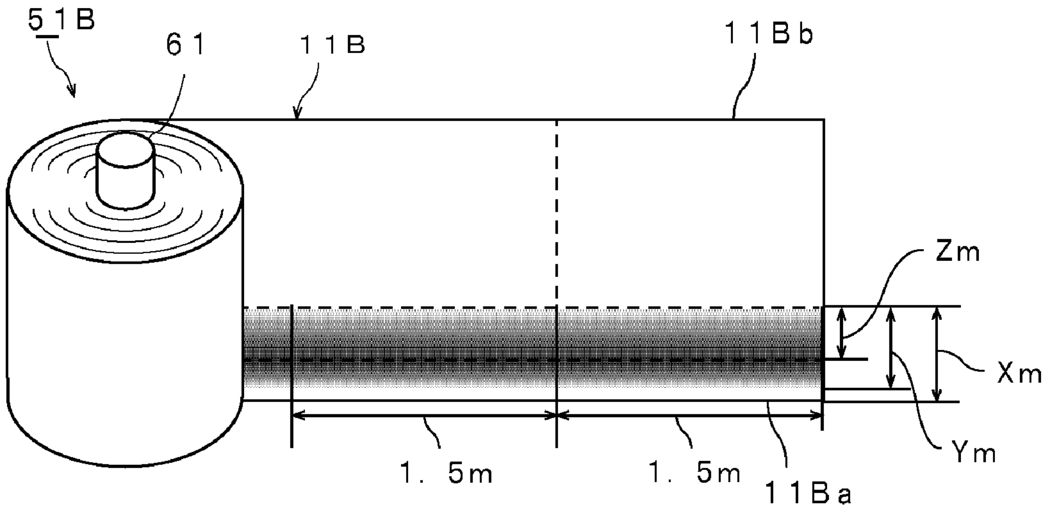

[FIG. 13.]

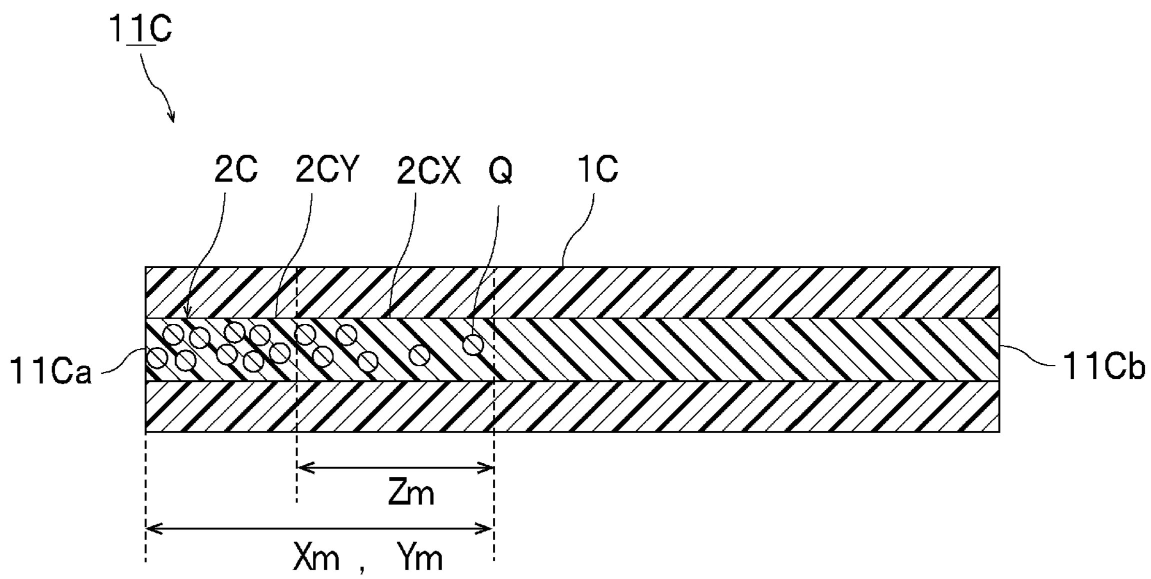
11C
2C
2CY
2CX
Q
1C
11Ca
11Cb
Zm
Xm , Ym

[FIG. 14.]

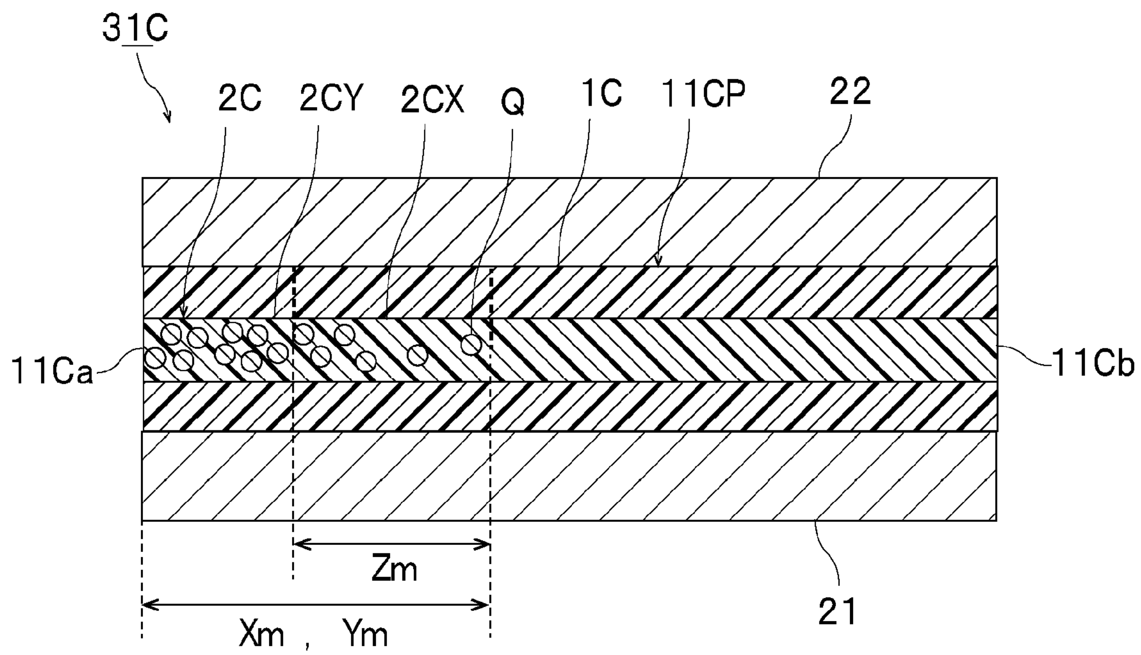
31C
2C
2CY
2CX
Q
1C
11CP
22
11Ca
11Cb
Zm
Xm , Ym
21

[FIG. 15.]

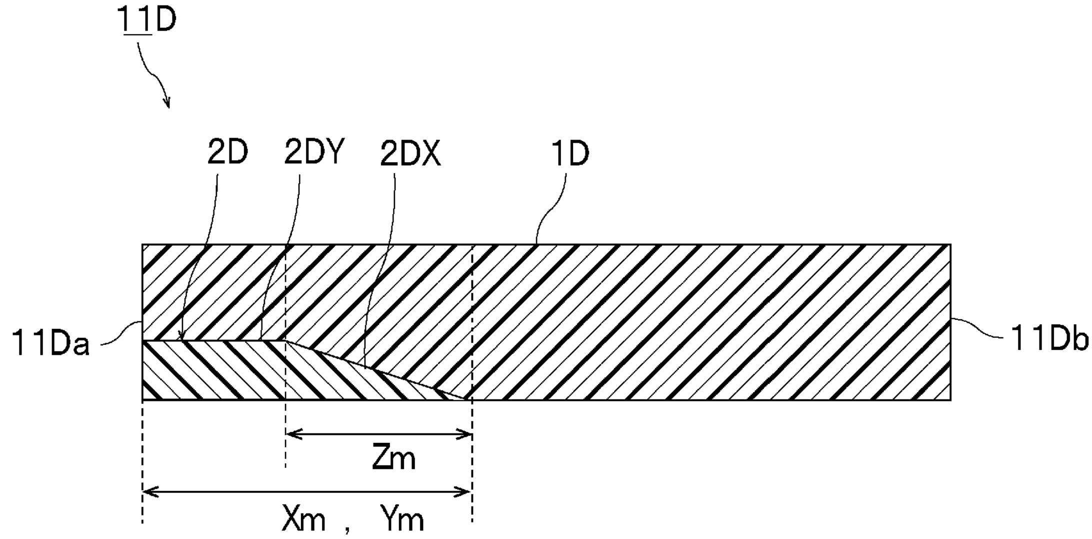
11D
2D
2DY
2DX
1D
11Da
11Db
Zm
Xm , Ym

[FIG. 16.]

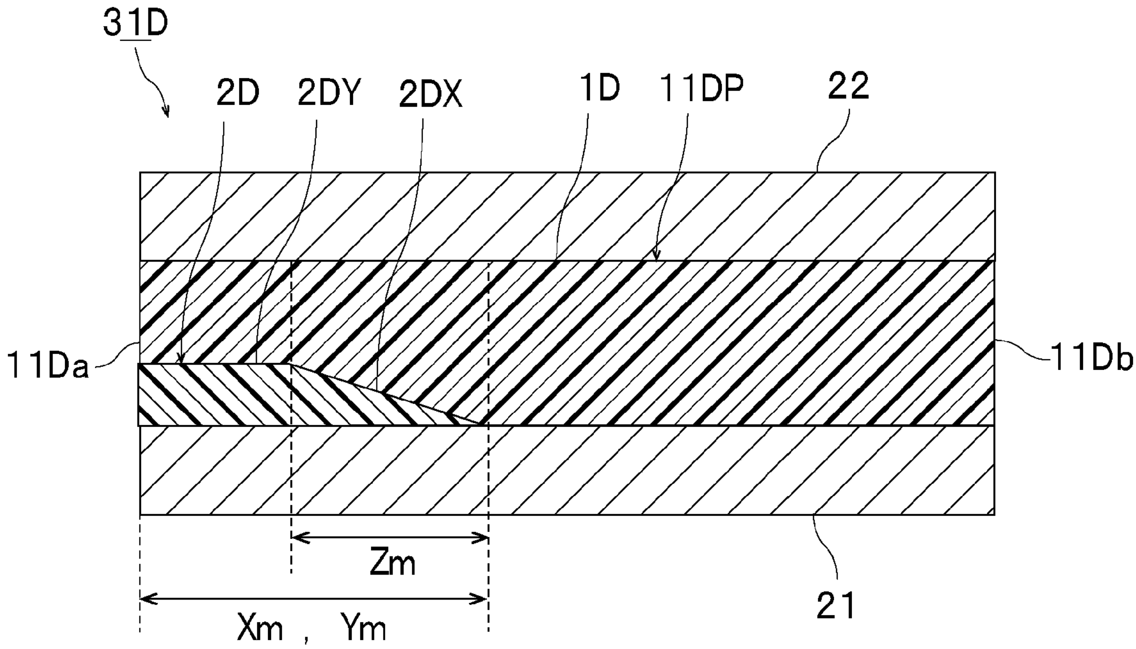
31D
2D
2DY
2DX
1D
11DP
22
11Da
11Db
Zm
21
Xm , Ym

[FIG. 17.]

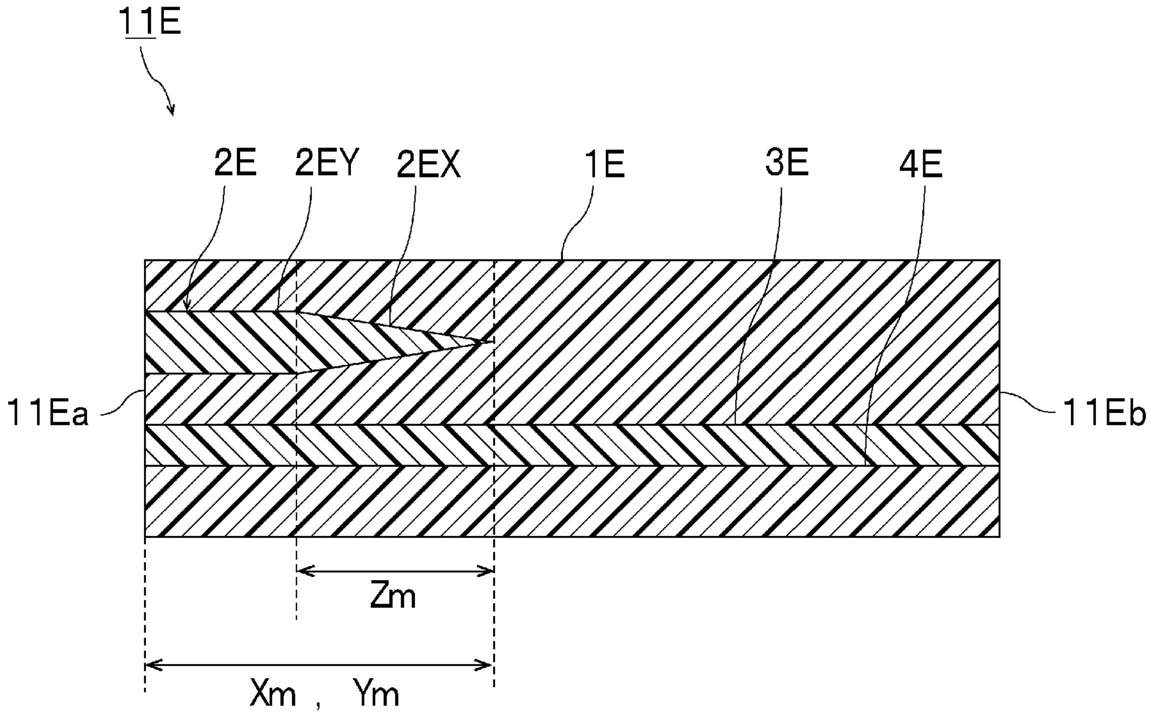
11E
2E
2EY
2EX
1E
3E
4E
11Ea
11Eb
Zm
Xm , Ym

[FIG. 18.]

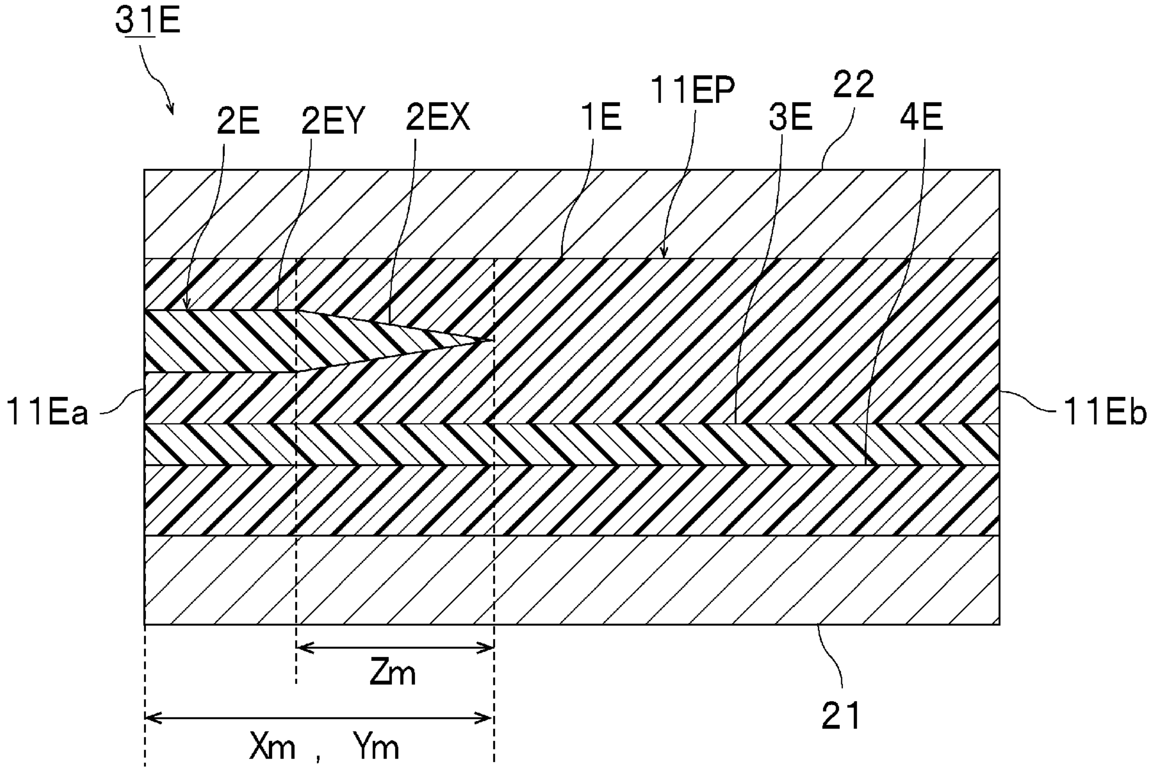
31E
2E
2EY
2EX
1E
11EP
22
3E
4E
11Ea
11Eb
Zm
Xm , Ym
21

[FIG. 19.]

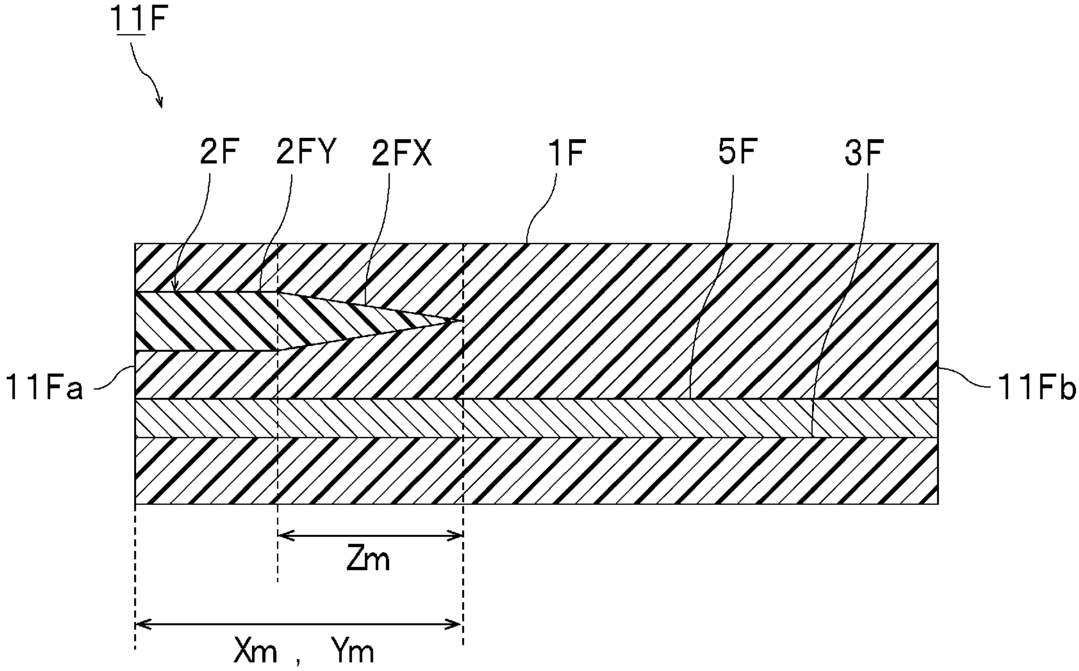
11F
2F
2FY
2FX
1F
5F
3F
11Fa
11Fb
Zm
Xm , Ym

[FIG. 20.]

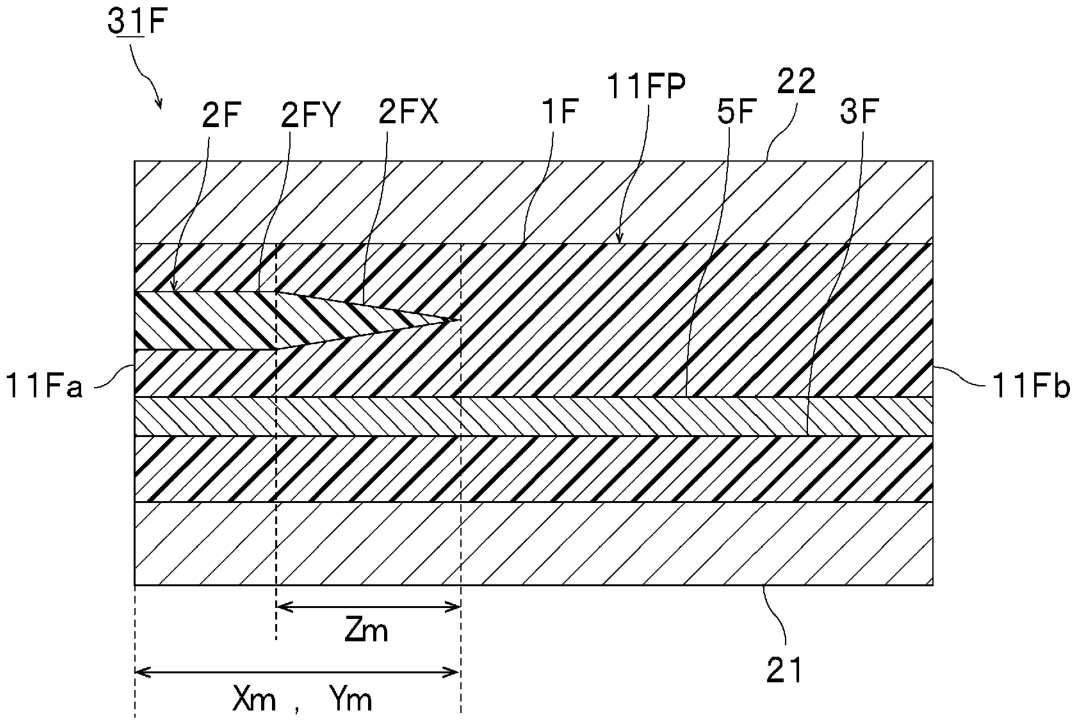
31F
2F
2FY
2FX
1F
11FP
5F
22
3F
11Fa
11Fb
Zm
21
Xm , Ym

[FIG. 21.]

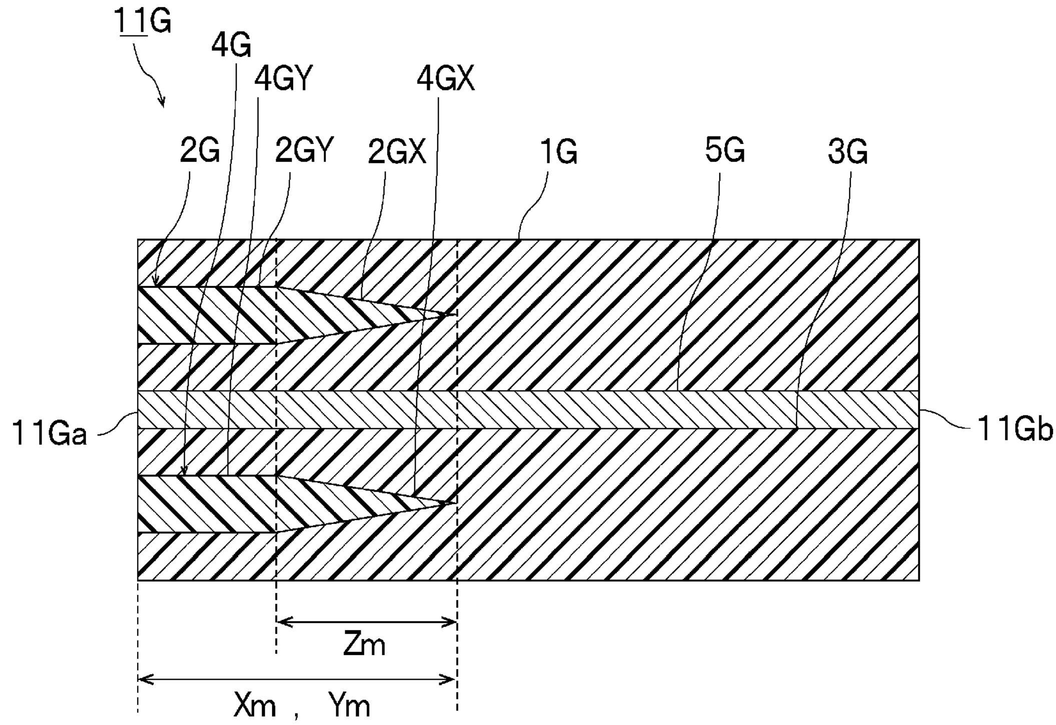
11G
4G
4GY
4GX
2G
2GY
2GX
1G
5G
3G
11Ga
11Gb
Zm
Xm , Ym

[FIG. 22.]

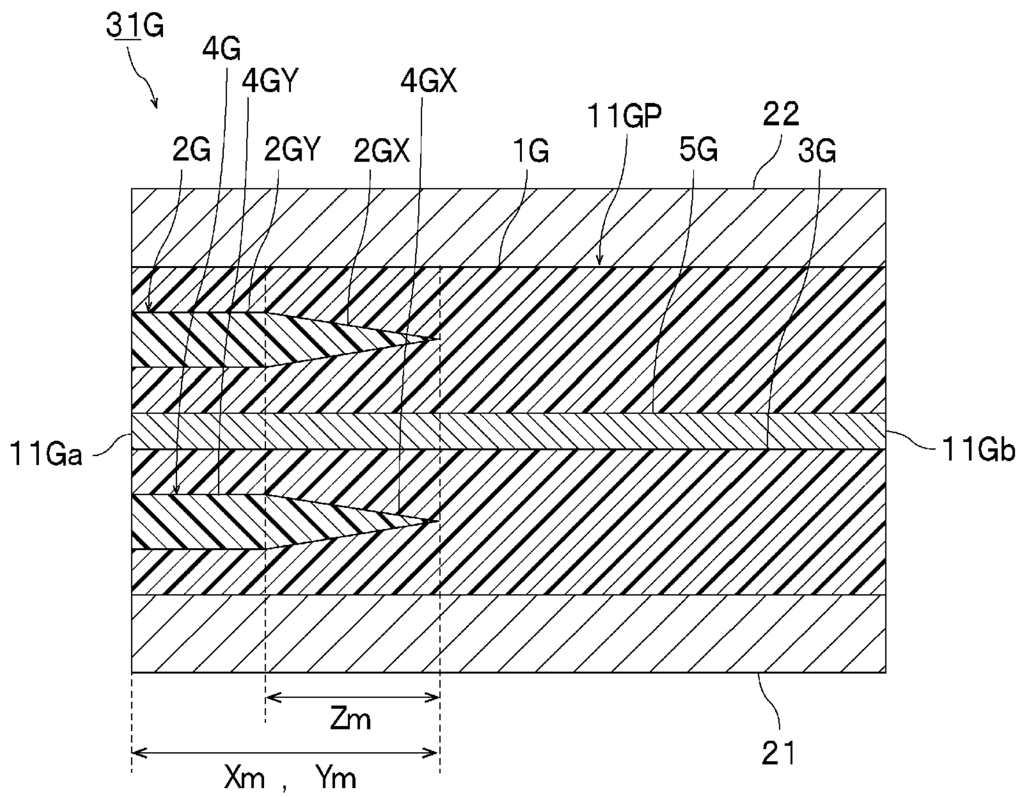
31G
4G
4GY
4GX
11GP
22
2G
2GY
2GX
1G
5G
3G
11Ga
11Gb
Zm
21
Xm , Ym

[FIG. 23.]

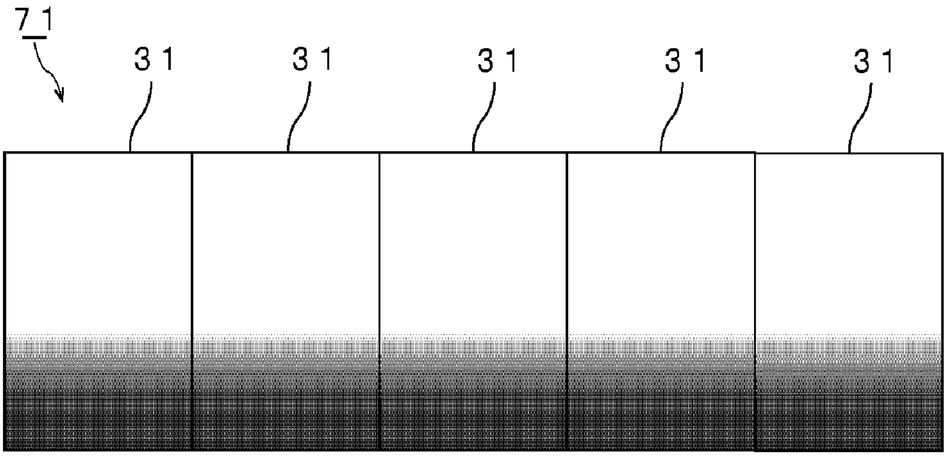


[FIG. 24.]

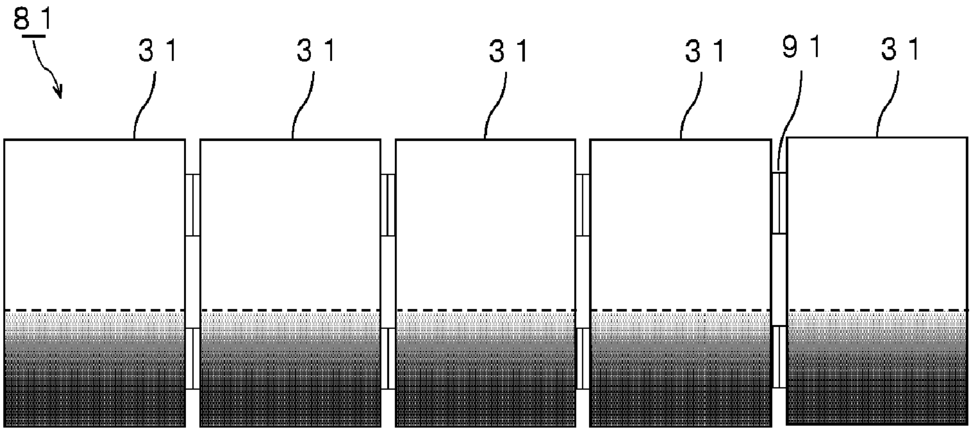


[FIG. 25.]

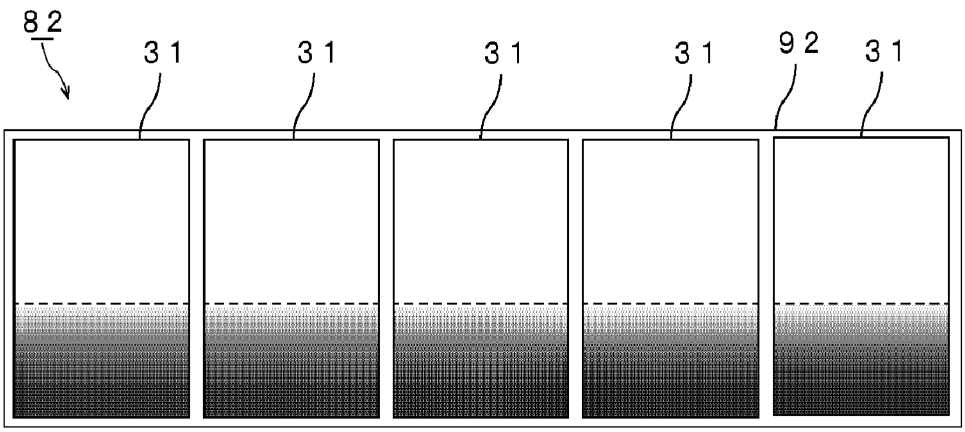

[FIG. 26.]

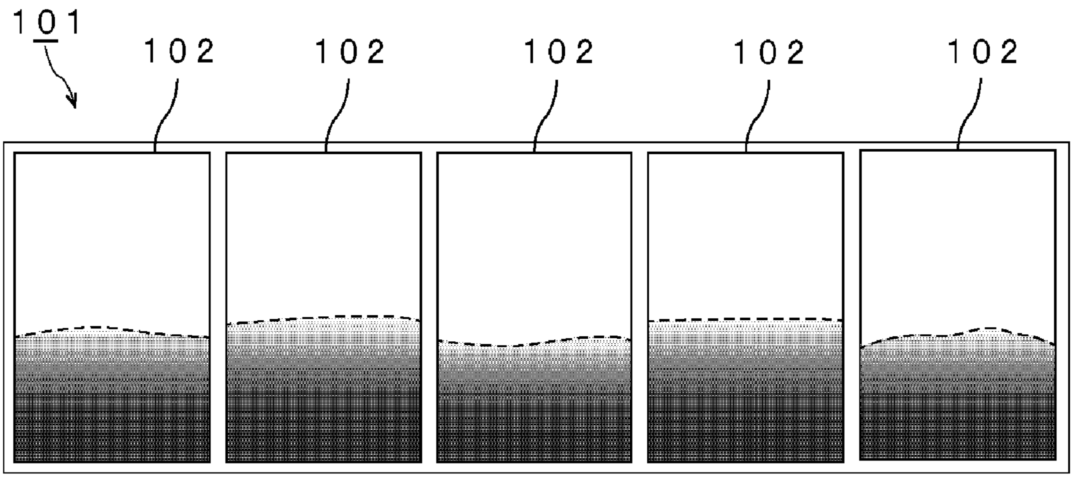

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006082800 A1
- WO 2014077328 A1
- WO 2015072538 A1
- EP 0464790 A1

### Non-patent literature cited in the description

- *CHEMICAL ABSTRACTS,* 6358-69-6
- *CHEMICAL ABSTRACTS,* 12671-74-8
- *CHEMICAL ABSTRACTS,* 12271-01-1
- *CHEMICAL ABSTRACTS,* 8910-94-5
- *CHEMICAL ABSTRACTS,* 71902-17-5
- *CHEMICAL ABSTRACTS,* 13676091-0
- *CHEMICAL ABSTRACTS,* 15958-69-6
- *CHEMICAL ABSTRACTS,* 12236-11-2
- *CHEMICAL ABSTRACTS,* 81-48-1
- *CHEMICAL ABSTRACTS,* 6408-72-6
- *CHEMICAL ABSTRACTS,* 61969-44-6
- *CHEMICAL ABSTRACTS,* 37229-23-5
- *CHEMICAL ABSTRACTS,* 116-75-6
- *CHEMICAL ABSTRACTS,* 104491-84-1
- *CHEMICAL ABSTRACTS,* 3321-10-4
- *CHEMICAL ABSTRACTS,* 70956-30-8
- *CHEMICAL ABSTRACTS,* 88650-91-3